(19) Europäisches Patentamt
European Patent Office
Office européen des brevets

(11) EP 4 664 564 A1

(12) **EUROPEAN PATENT APPLICATION**
published in accordance with Art. 153(4) EPC

(43) Date of publication:
**17.12.2025 Bulletin 2025/51**

(21) Application number: **24753572.7**

(22) Date of filing: **05.02.2024**

(51) International Patent Classification (IPC):
***H01M 4/62*** (2006.01) ***H01M 4/133*** (2010.01)
***H01M 4/134*** (2010.01) ***H01M 4/36*** (2006.01)
***H01M 4/583*** (2010.01) ***H01M 4/38*** (2006.01)
***H01M 10/052*** (2010.01) ***H01M 4/02*** (2006.01)

(52) Cooperative Patent Classification (CPC):
**H01M 4/02; H01M 4/133; H01M 4/134; H01M 4/36; H01M 4/38; H01M 4/583; H01M 4/62; H01M 10/052;** Y02E 60/10

(86) International application number:
**PCT/KR2024/001655**

(87) International publication number:
**WO 2024/167245 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2023 KR 20230015591**

(71) Applicant: **SK On Co., Ltd.**
**Seoul 03161 (KR)**

(72) Inventors:
- **KIM, Sung Do**
  **Daejeon 34124 (KR)**
- **LEE, Yong Seok**
  **Daejeon 34124 (KR)**
- **KIM, Jeong A**
  **Daejeon 34124 (KR)**

(74) Representative: **Stolmár & Partner Patentanwälte PartG mbB**
**Blumenstraße 17**
**80331 München (DE)**

(54) **ELECTRODE**

(57) The present application may provide an electrode, a battery cell, a battery module, and a battery pack comprising the electrode, and the electrode having a current collector and an active material layer located on at least one side of the current collector, wherein the active material layer comprises an active material, a binder and a conductive polymer, wherein the conductive polymer comprises a conductive component and an ionized polymer component, wherein the binder comprises a resin A having an $SP_d$ of 30 $(MPa)^{1/2}$ or less according to the following equation 1, wherein the polymer component comprises a resin B having an $SP_d$ of 30 $(MPa)^{1/2}$ or less according to the following equation 1: [Equation 1] $SP_d = SP_W - SP_P$ In equation 1, $SP_W$ is the solubility parameter of water measured at 25°C., and $SP_P$ is the solubility parameter of the resin A or resin B measured at 25°C.

FIG. 1

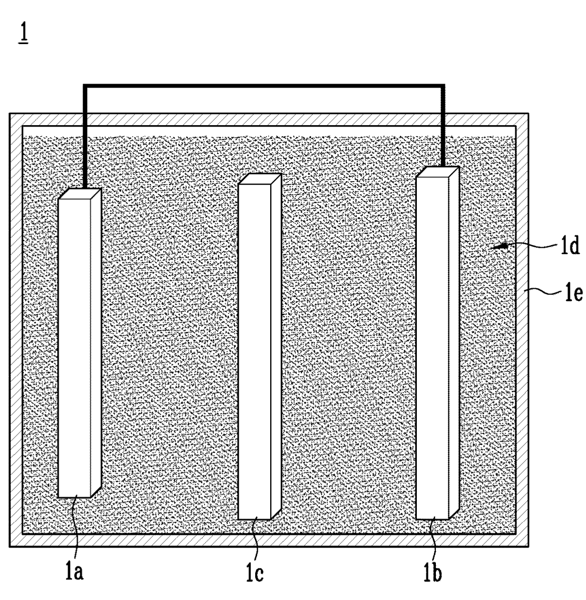




Processed by Luminess, 75001 PARIS (FR)

## Description

[Technical Field]

This application relates to an electrode. Specifically, the present application relates to the electrode and an application of the electrode.

[Background Art]

Recently, the demand for mobile devices such as smartphones, tablet PCs, and wireless earphones has been increasing. In addition, as the development of electric vehicles, energy storage batteries, robots, satellites, etc., is in full swing, research on high-performance secondary batteries capable of repetitive charging and discharging as energy sources is being actively conducted.

Currently, commercialized secondary batteries include nickel-cadmium batteries, nickel-hydrogen batteries, nickel-zinc batteries, and lithium secondary batteries. Among them, lithium secondary batteries have little memory effect compared to nickel-based secondary batteries, so they are free to charge and discharge, have a very low self-discharge rate, and have a high energy density.

Meanwhile, the term of electrode refers to an electrode that encompasses the positive electrode and negative electrode of a battery cell. The electrode is generally prepared by applying a slurry comprising an electrode active material onto a current collector in the form of a metal plate and then drying.

The slurry may contain a conductive material to improve electrical conductivity. In order to secure excellent electrical conductivity, there is a method of applying a large amount of a conductive material having excellent electrical conductivity. However, conductive materials with excellent electrical conductivity are generally expensive, and there are disadvantages from an industrial perspective to apply them in large quantities.

Lowering the content of conductive materials can lead to economical production, but the performance of battery cells may not be properly demonstrated due to a decrease in electrical conductivity.

Therefore, there is a need for a technology that can sufficiently demonstrate the performance of battery cells while establishing an economical production system.

[Prior Art Documents]

[Patent Document]

(Patent Document 1) Korean Patent Publication No. 10-2022-0150693 (Title: High Voltage Battery Module with Excellent Cooling Efficiency)

(Patent Document 2) Korean Patent Laid-Open No. 10-2022-0142853 (Title: Battery Pack and Manufacturing Method Thereof)

[Non-Patent Document]

(Non-Patent Document 1) Handbook of Solubility Parameters and Other Cohesion Parameters, 2nd edition. CRC Press

(Non-Patent Document 2) J. Brandrup, E. H. Immergut, and E.A. Grulke, des.Polymer Handbook, 4 th ed., Wiley-Interscience, New York, 1999.

(Non-Patent Document 3) Yanlong Luo et al., 2017, J. Phys. Chem.C 2017, 121, 10163-10173

[Disclosure]

[Technical Problem]

An object of the present application is to provide an electrode having excellent electrical conductivity.

In addition, an object of the present application to provide an electrode having an excellent capacity retention rate.

In addition, an object of the present application is to provide a battery cell, a battery module, and a battery pack including the electrode, and to provide an electrical device including at least one of the battery cell, the battery module, and

the battery pack.

[Technical Solution]

An electrode according to an embodiment of the present application may comprise a current collector and an active material layer located on at least one side of the current collector, the active material layer may comprise an active material, a binder, and a conductive polymer, the conductive polymer may comprise a conductive component and an ionized polymer component, the binder may comprise a resin A having an $SP_d$ of 30 $(MPa)^{1/2}$ or less according to the following equation 1, and the polymer component may comprise a resin B having an $SP_d$ according to the following equation 1:
*20

*[Equation 1]

$$SP_d = SP_W - SP_P$$

In equation 1, $SP_W$ is the solubility parameter of water measured at 25 °C, and $SP_P$ is the solubility parameter of the resin A or resin B measured at 25 °C.

In the electrode according to an embodiment of the present application, the ratio ($SP_{P1}/SP_{P2}$) of the solubility parameter ($SP_{P1}$) measured at 25 °C. of the resin A to the solubility parameter ($SP_{P2}$) measured at 25 °C, of the resin B, may be in the range of 0.8 to 1.2.

In the electrode according to an embodiment of the present application, a ratio ($M_{W1}/M_{W2}$) of a weight-average molecular weight ($M_{W1}$) of the resin A to a weight-average molecular weight ($M_{W2}$) of the resin B may be in a range of 0.1 to 20.

In the electrode according to an embodiment of the present application, the weight-average molecular weight ($M_{W2}$) of the resin B may be in a range of 2,000 g/mol to 200,000 g/mol.

In the electrode according to an embodiment of the present application, each of the resin A and the resin B may independently have a glass transition temperature (Tg) of 50 °C or more.

In the electrode according to an embodiment of the present application, the conductive polymer may have an electrical conductivity of $2\times10^{-3}$ S/cm or more measured by a 4-probe method at 25 °C.

In the electrode according to an embodiment of the present application, the conductive component and the ionized polymer component may be electrically coupled to each other in the conductive polymer.

In an electrode according to an embodiment of the present application, the conductive polymer may comprise the ionized polymer component in an amount of 10 wt% or more based on the total weight of the conductive polymer.

In an electrode according to an embodiment of the present application, the conductive polymer may comprise the conductive component in a range of 30 parts by weight to 800 parts by weight relative to 100 parts by weight of the ionized polymer component.

In the electrode according to an embodiment of the present application, the weight ratio ($W_B/W_{CP}$) of the binder ($W_B$) and the conductive polymer ($W_{CP}$) may be within a range of 1 to 100.

In the electrode according to an embodiment of the present application, the conductive polymer may be contained in an amount of 1 wt% or less relative to the total weight of the active material layer.

In the electrode according to an embodiment of the present application, the active material may be contained in a range of 80 wt% to 99 wt% relative to the total weight of the active material layer.

In the electrode according to an embodiment of the present application, the active material may comprise a carbon active material and a silicon active material.

In the electrode according to an embodiment of the present application, the active material may comprise the carbon active material in a range of 80 wt% to 99 wt% relative to the total weight of the active material, and the active material may comprise the silicon active material in a range of 0.01 parts by weight to 30 parts by weight relative to 100 parts by weight of the carbon active material.

In the electrode according to an embodiment of the present application, a ratio ($D_C/D_{Si}$) between an average particle size ($D_C$) of a carbon active material and an average particle size of a silicon active material in the active material may be in a range of 0.1 to 10.

In the electrode according to an embodiment of the present application, the active material layer further comprises a conductive material, and the conductive material may be contained in an amount of 0.2 wt% or less relative to the total weight of the active material layer.

A battery cell according to an embodiment of the present disclosure comprises a positive electrode, a negative electrode, and a separator interposed between the positive electrode and the negative electrode, the negative electrode is an electrode according to an embodiment, and in the following equation 2, an $L_R$ when n is 100 may be 80% or more, and an $L_R$ when N is 200 may be 55% or more.

[Equation 2]

$$L_R = L_2/L_1 \times 100\ (\%)$$

In equation 2, $L_1$ is the discharge capacity at 1 cycle under the condition that 25 °C is maintained, and $L_2$ is the discharge capacity in n cycles under the condition that 25 °C is maintained, where 1 cycle is defined as charging from 25 °C to 4.2V with 0.5C current and CC-CV charging mode, and then discharging to 2.7V with a 0.5C current after charging to 0.05C.

A battery module according to an embodiment of this application comprises one or more battery cells, and the battery cells may be battery cells according to an embodiment.

A battery pack according to an embodiment of this application may comprises one or more battery cells or one or more battery modules, the battery cell may be a battery cell according to an embodiment, and the battery module may be a battery module according to an embodiment.

An electrical device according to an embodiment of this application may comprises one or more selected from the group consisting of one or more battery cells, one or more battery modules, and one or more battery packs, the battery cell may be a battery cell according to an embodiment, the battery module may be a battery module according to an embodiment and the battery pack may be a battery pack according to an embodiment.

[Advantageous Effects]

The present application can provide an electrode having excellent electrical conductivity.

In addition, the present application can provide an electrode having an excellent capacity retention rate.

In addition, the present disclosure provides a battery cell, a battery module, and a battery pack including the electrode, and provides an electrical device including at least one of the battery cell, the battery module, and the battery pack.

[Description of Drawings]

FIG. 1 is a schematic diagram of an exemplary structure of a battery cell according to an embodiment of this application.

FIG. 2 is a schematic diagram of an exemplary structure of a battery module according to an embodiment of this application.

FIG. 3 is a schematic diagram of an exemplary structure of a battery pack according to an embodiment of this application.

[Modes of the Invention]

The descriptions of the embodiments disclosed in this application are illustrated only for the purpose of describing the embodiments according to the technical idea of the present invention. Furthermore, embodiments according to the technical idea of the present invention may be implemented in various forms in addition to the embodiments disclosed in this application. In addition, the technical idea of the present invention is not to be construed as being limited to the embodiments described in this application.

Among the physical properties mentioned in this application, when the measured temperature affects the physical properties, unless otherwise specified, the physical properties are those measured at normal temperature and normal pressure.

As used herein, the term "normal temperature" refers to a natural temperature that is not heated or cooled, and may mean, for example, any temperature within the range of 10 °C to 30 °C, for example, a temperature of about 15 °C or more, about 18 °C or more or about 20 °C or more and about 23 °C or lower or 25 °C. Unless otherwise specified in this application, the unit of temperature is °C.

Among the physical properties mentioned in this application, when the measurement pressure affects the

physical properties, unless otherwise specified, the physical properties are those measured at normal pressure.

The term of normal pressure as used in this application refers to atmospheric pressure within a range of about 700 mmHg to 800 mmHg as normal pressure, which is a natural pressure that is not pressurized and depressurized.

As used in this application, the terms "a" to "b" include "a" and "b" and mean within a range between "a" and "b." For example, "included in parts by weight of a to b" has the same meaning as "includes within the range of parts by weight of "a to b."

The present application can provide an electrode having excellent electrical conductivity. In addition, the present application can provide the electrode having an excellent capacity retention rate. In addition, the present disclosure provides a battery cell 1, a battery module 2, and a battery pack 3 including the electrode, and may provide an electrical device including at least one of the battery cell 1, battery module 2, or battery pack 3. Embodiments of the battery cell 1, battery module 2 and battery pack 3 may refer to FIGS. 1 to 3, respectively.

The electrode according to an embodiment of the present application may comprise a current collector and an active material layer. The active material layer may be located on at least one side of the current collector.

In an electrode according to an embodiment of the present application, the current collector may be used as a material having electrical conductivity and being electrochemically durable.

Furthermore, the material of the current collector may be determined depending on whether the electrode is a positive electrode or a negative electrode. When the electrode is a positive electrode, the current collector may be a positive electrode current collector, and when the electrode is a negative electrode, the current collection may be a negative electrode current collector. In addition, the type, size, shape, and the like of the positive electrode current collector are not particularly limited as long as they have conductivity without causing a chemical change in the battery cell 1. As the positive electrode current collector, for example, stainless steel, aluminum, nickel, titanium, calcined carbon, or aluminum, or stainless steel surface-treated with carbon, nickel, titanium or silver or the like can be used. The type, size, shape, and the like of the negative electrode current collector are not particularly limited as long as they have conductivity without causing a chemical change in the battery cell 1. As the negative electrode current collector, for example, copper, stainless steel, nickel, titanium, calcined carbon, copper, or stainless steel surface-treated with carbon, nickel, titanium or silver, or a copper-cadmium alloy can be used.

In addition, the current collector may have an appropriate thickness as required. Although not particularly limited, the current collector may have a thickness in the range of 1 $\mu$m to 500 $\mu$m, in the range of from 1 $\mu$m to 300 $\mu$m, in a range of from 1$\mu$m to 100 $\mu$m, or in a range of 1$\mu$m to 50 $\mu$m.

The terms of thickness (or height), width, and length used in this application mean average values unless otherwise specified, and can be measured in accordance with methods in the art through a measuring instrument capable of measuring the thickness (or height), the width, and the length, respectively.

In addition, the current collector can form fine irregularities on the surface to further strengthen the adhesive force with the active material layer. For example, the form of the current collector may be one or more selected from the group consisting of a film, a sheet, a foil, a net, a porous body, a foam, and a nonwoven body.

In the electrode according to an embodiment of the present application, the active material layer may be formed by a slurry composition. Specifically, the active material layer may refer to a form in which the slurry composition is dried, or a form in which rolling is performed after drying as necessary.

The term of drying as used herein refers to a state in which substantially no solvent is contained, for example, a state in which the amount of solvent contained in each layer is about 1 wt% or less, 0.5 wt% or less, 0.1 wt% or less, or 0.05 wt% or less. The drying conditions applied for this purpose are not particularly limited, and may be adjusted so that the solvent amount as described above can be achieved.

The active material layer may be formed by applying the slurry composition on at least one surface of a current collector and drying the slurry composition. As described above, after the drying, the rolling may be performed as necessary. The above-described rolling may be performed through a rolling jig or the like according to a known method. In addition, the method of performing the coating is not particularly limited, and a known method can be used. Specifically, a doctor blade method, a dip method, a reverse roll method, a direct roll method, a gravure method, an extrusion method, a brushing method, or the like may be used as a method of performing the above application. The application thickness of the slurry composition may be applied to an appropriate thickness in consideration of the thickness after drying, and the known method described above may be appropriately selected and performed according to the application thickness.

The slurry composition may also be applied to at least one side of the current collector at a suitable loading to suit the purpose. The loading amount is not particularly limited, but may be, for example, 1 mg/cm$^2$ or more, 2 mg/cm$^2$ or more, 3 mg/cm$^2$ or more, 4 mg/cm$^2$ or more, 5 mg/cm$^2$ or more, 6 mg/cm$^2$ or more, 7 mg/cm$^2$ or more, 8 mg/cm$^2$ or more, or 50 mg/cm$^2$ or less, 45 mg/cm$^2$ or less, 40 mg/cm$^2$ or less, 35 mg/cm$^2$ or less, 30 mg/cm$^2$ or less, 25 mg/cm$^2$ or less, 20 mg/cm$^2$ or less, or 10 mg/cm$^2$ or less, or may be within a range formed by appropriately selecting the upper and lower limits described above.

In addition, the slurry composition applied on at least one side of the current collector may be dried at an appropriate temperature and time. The drying may be performed through an oven, and the drying may be performed at a

temperature of the oven of 50°C or more, 60 °C or more, 70 °C or more, 80 °C or more, 90 °C or more, or 100 °C or more. In addition, the drying time may be performed within an appropriate range in consideration of the above drying temperature.

The slurry composition forming the active material layer may contain various components. In addition, the slurry composition may be in a state in which the various components are appropriately dispersed. The slurry composition may be prepared by incorporating the various components according to an appropriate method and order, followed by an appropriate mixing method. The mixing method is not particularly limited, and a known method can be used. Specifically, the mixing method may be a ball mill, a sand mill, a bead mill, a pigment disperser, an ultrasonic disperser, a homogenizer, a rotating and revolving mixer, or a fill mixer. The details of the slurry composition forming the active material layer will be described later.

The active material layer may be in direct contact with the current collector, or may be located on the current collector even if it is not in direct contact. For example, a separate layer may be provided between the current collector and the active material layer.

In the electrode according to an embodiment of the present application, the active material layer may be a single layer. In another embodiment, the active material layer of the electrode may be multi layered.

In the electrode according to an embodiment of the present application, the active material layer may include an active material. The active material layer may comprise at least 80 wt%, at least 81 wt%, at least 82 wt%, at least 83 wt%, at least 84 wt%, at least 85 wt%, at least 86 wt%, at least 87 wt%, at least 88 wt%, at least 89 wt%, at least 90 wt%, at least 91 wt%, at least 92 wt%, at least 93 wt%, at least 94 wt%, or at least 95 wt%, or at most 99 wt%, at most 98.5 wt%, or at most 98 wt% of the active material relative to the total weight of the active material layer. In addition, the active material layer may contain the active material within a range formed by appropriately selecting the upper limit and the lower limit described above. When the active material layer of the above electrode contains the active material within the above range, it is possible to have an excellent capacity retention rate.

In the electrode according to an embodiment of the present application, the active material of the active material layer may vary depending on whether the electrode is a positive electrode or a negative electrode. If the electrode is a positive electrode, the active material may be a positive electrode active material. In addition, when the electrode is a negative electrode, the active material may be a negative electrode active material.

Embodiments of the positive electrode active material include, but are not particularly limited to, a layered compound such as lithium cobalt oxide ($LiCoO_2$) or lithium nickel oxide ($LiNiO_2$), or a compound substituted with one or more transition metals; a lithium iron oxide such as $LiFe_3O_4$; a lithium manganese oxide such as the formula $Li_{1+c1}Mn_{2-c1}O_4$ ($0 \leq c1 \leq 0.33$), $LiMnO_3$, $LiMn_2O_3$, or $LiMnO_2$; a lithium copper oxide ($Li_2CuO_2$); a vanadium oxide such as $LiV_3O_8$, $V_2O_5$, or $Cu_2V_2O_7$; a Ni site-type lithium nickel oxide represented by the formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium mannan composite oxide represented by the Formula $LiMn_{2-c3}M_{c3}O_2$ (here, M is at least any one selected from the groups consisting of Co, Ni, Fe, Cr, Zn, and Ta, and satisfies $0.01 \leq c3 \leq 0.1$) or $Li_2Mn_3MO_8$ (here, M is at least any of the groups consisting of Fe, Co, Ni, Cu, and Zn); a lithium nickel cobalt manganese (NCM) composite oxide, a lithium nickel cobalt manganese aluminum (NCMA) composite oxide, and $LiMn_2O_4$ in which a part of Li in the formula is substituted with an alkaline earth metal ion.

The negative electrode active material is not particularly limited, and for example, a compound capable of reversible intercalation and deintercalation of lithium can be used. Specific embodiments include carbonaceous materials such as graphite (artificial graphite, natural graphite, or graphitized carbon fiber) or amorphous carbon; metallic compounds that can be alloyed with lithium such as Si, Al, Sn, Pb, Zn, Bi, In, Mg, Ga, Cd, Si alloys, Sn alloys, or Al alloys; metal oxides that can dope and dedope lithium such as $SiO_\beta$ ($0<\beta\leq 2$), $SnO_2$, vanadium oxide, and lithium vanadium oxide; or composites containing the above metallic compounds and carbonaceous materials, such as Si-C composites or Sn-C composites, and any one or a mixture of two or more thereof may be used. In addition, a metallic lithium thin film may be used as the negative electrode active material. As the carbon material, low crystalline carbon, high crystalline carbon or the like may be used. Examples of low crystalline carbon may include soft carbon and hard carbon. Examples of the highly crystalline carbon may include amorphous, plate-like, flake-like, spherical or fibrous natural graphite or artificial graphite, Kish graphite, pyrolytic carbon, mesophase pitch based carbon fiber, carbon microbeads, mesophase pitchers, and high temperature calcined carbon such as petroleum or coal tar pitch derived cokes.

In the electrode according to an embodiment of the present application, the active material of the active material layer may include a carbon active material and a silicon active material. The carbon active material and the silicon active material may be, for example, materials capable of transferring electrons in a lithium battery cell.

The carbon active material is not particularly limited, and those that can be used in the art can be used. Examples of the carbon active material include amorphous carbon, graphite, natural graphite, artificial graphite, mesocarbon microbeads, and pitch based carbon fibers. These carbon active materials may be used singly or in combination.

Examples of the silicon active material include silicon (Si), an alloy containing silicon, SiO, $SiO_2$, $SiO_x$, and a composite product of a Si-containing material and conductive carbon, which is obtained by coating or composited with the Si-containing material with conductive carbon. These silicone active materials may be used singly or in combination. High

capacity can be achieved by using silicone active materials.

As the alloy containing silicon in the above, for example, an alloy composition containing silicon and at least one element selected from the group consisting of titanium, iron, cobalt, nickel, and copper can be exemplified. As the alloy containing silicon, for example, an alloy composition containing transition metals such as silicon, aluminum, and iron, or containing rare earth elements such as silicon, tin, and yttrium can also be used.

$SiO_x$ may be a compound containing Si and at least one of SiO and $SiO_2$, wherein x is generally in the range of 0.01 or more and less than 2. $SiO_x$ can be formed using, for example, a disproportionation reaction of SiO. Specifically, $SiO_x$ can be produced by heat-treating SiO optionally in the presence of a polymer such as polyvinyl alcohol to produce silicon and silicon dioxide. The heat treatment may be performed, for example, at a temperature of about 900 °C or more, or about 1000 °C or more under an atmosphere containing an organic gas and/or steam after grinding and mixing SiO and the polymer.

The composite of the Si-containing material and the conductive carbon includes, for example, a compound obtained by heat-treating a pulverized mixture of SiO, a polymer such as polyvinyl alcohol, and optionally a carbon material under an atmosphere containing an organic gas and/or steam. The composite can also be obtained by known methods such as a method in which the surface of SiO particles is coated by a chemical vapor deposition method using an organic gas or the like, and a method in which SiO particles and graphite or artificial graphite are combined into particles (assembling) by a mechanochemical method.

In an electrode according to an embodiment of the present application, the active material of the active material layer may include a carbon active material in an amount of at least 80 wt%, at least 81 wt%, at least 82 wt%, at least 83 wt%, at least 84 wt%, at least 85 wt%, at least 86 wt%, at least 87 wt%, at least 88 wt%, at least 89 wt%, at least 90 wt%, or at most 99 wt%, at most 98 wt%, at most 97 wt%, at most 96 wt%, at most 95 wt%, at most 94 wt%, at most 93 wt%, at most 92 wt%, at most 91 wt% relative to the total weight of the active material. In addition, the active material may contain a carbon active material within a range formed by appropriately selecting the upper limit and the lower limit described above. The active material can have an excellent capacity retention rate by including the carbon active material within the above-described range.

In the electrode according to an embodiment of the present application, the active material of the active material layer may contain 0.01 parts by weight or more, 0.05 parts by weight or more, 0.1 parts by weight or more, 0.5 parts by weight or more, 1 part by weight or more, 2 parts by weight or more, 3 parts by weight or more, 4 parts by weight or more, 5 parts by weight or more, 6 parts by weight or more, 7 parts by weight or more, 8 parts by weight or more, 9 parts by weight or more, 10 parts by weight or more, 11 parts by weight or more, or 30 parts by weight or less, 29 parts by weight or less, 28 parts by weight or less, 27 parts by weight or less, 26 parts by weight or less, 25 parts by weight or less, 24 parts by weight or less, 23 parts by weight or less, 22 parts by weight or less, 21 parts by weight or less, 20 parts by weight or less, 19 parts by weight or less, 18 parts by weight or less, 17 parts by weight or less, 16 parts by weight or less, 15 parts by weight or less, 14 parts by weight or less, 13 parts by weight or less, or 12 parts by weight or less, of the silicon active material, relative to 100 parts by weight of the carbon active material. In addition, the active material may include a silicon active material within a range formed by appropriately selecting the upper limit and the lower limit described above. By controlling the content ratio of the carbon active material and the silicon active material, the above active material can prevent the occurrence of wrinkles and swelling of the electrode and have an excellent capacity retention rate.

In the electrode according to an embodiment of the present application, the active material may include a carbon active material having an average particle size ($D_C$) of 1 μm or more, 2 μm or more, 3 μm or more, 4 μm or more, 5 μm or more, 6 μm or more, 7 μm or more, 8 μm or more, 9 μm or more, 10 μm or more, 11 μm or more, 12 μm or more, or 100 μm or less, 90 μm or less, 80 μm or less, 70 μm or less, 60 μm or less, 50 μm or less, 40 μm or less, 30 μm or less, 20 μm or less, or 15 μm or less. In addition, the active material may include a carbon active material having an average particle size ($D_C$) within a range formed by appropriately selecting the upper limit and the lower limit described above. The active material includes a carbon active material having an average particle size ($D_C$) within the range described above, so that the active material has an excellent capacity retention rate.

Meanwhile, the term of average particle size used in the present application refers to the D50 particle size to be measured, which may be a particle size measured by MASTERSIZER3000 of Marvem Ltd. equipment in accordance with the ISO-13320 standard. For the specific measurement of the average particle size, the following <Method of Physical Properties Measurement> can be referred to.

In the electrode according to an embodiment of the present application, the active material may include a silicon active material having an average particle size ($D_{Si}$) of 0.1 μm or more, 0.5 μm or more, 1 μm or more, 1.5 μm or more, 2 μm or more, 2.5 μm or more, 3 μm or more, 3.5 μm or more, 4 μm or more, 4.5 μm or more, 5 μm or more, 5.5 μm or more, 6 μm or more, or 100 μm or less, 90 μm or less, 80 μm or less, 70 μm or less, 60 μm or less, 50 μm or less, 40 μm or less, 30 μm or less, 20 μm or less, 15 μm or less, or 10 μm or less. In addition, the active material may include a silicon active material having an average particle size ($D_{Si}$) within a range formed by appropriately selecting the upper limit and the lower limit described above. When the active material contains a silicon active material having an average particle size ($D_{Si}$) within the above range, it is possible to prevent the occurrence of wrinkles and swelling of the electrode and to have an excellent

capacity retention rate.

In the electrode according to an embodiment of the present application, the active material may include a carbon active material and a silicon active material that satisfy an appropriate average particle size ratio. In the active material, the ratio ($D_C/D_{Si}$) of the average particle size ($D_C$) of the carbon active material to the average particle size of the silicon active material ($D_{Si}$) may be at least 0.1, at least 0.2, at least 0.3, at least 0.4, at least 0.5, at least 0.6, at least 0.7, at least 0.8, at least 0.9, at least 1, at least 1.1, at least 1.2, at least 1.3, at least 1.4, at least 1.5, at least 1.6, at least 1.7, at least 1.8, at least 1.9, or at least 2. In other embodiments, the ratio ($D_C/D_{Si}$) may be 10 or less, 9.5 or less, 9 or less, 8.5 or less, 8 or less, 7.5 or less, 7 or less, 6.5 or less, 6 or less, 5.5 or less, 5 or less, 4.5 or less, 4 or less, 3.5 or less, 3 or less, or 2.5 or less. Further, in other embodiments, the ratio ($D_C/D_{Si}$) may be within a range formed by appropriately selecting the foregoing upper and lower limits. In addition, the above-described active material satisfies the ratio ($D_C/D_{Si}$) within the range formed by appropriately selecting the above-described upper limit and lower limit, thereby preventing the occurrence of wrinkles and swelling of the electrode and ensuring an excellent capacity retention rate.

On the other hand, in the above active material, the average particle size $D_C$ of the carbon active material may be larger than the average particle size $D_{Si}$ of the silicon active material. That is, it may be desirable for the ratio $D_C/D_{Si}$ to be greater than 1. By controlling the average particle size $D_C$ of the carbon active material to be larger than the average particle size $D_{Si}$ of the silicon active material, it is possible to prevent the occurrence of wrinkles and swelling of the electrode and to have an excellent capacity retention rate.

In addition, in the electrode according to an embodiment of the present application, the active material may further include a metal active material as necessary. Examples of the metal active material include lithium metal and alloys containing lithium. Examples of the alloy containing lithium include, but are not limited to, an alloy composition containing lithium and at least one element selected from the group consisting of Ag, Al, Ba, Bi, Cu, Ga, Ge, In, Ni, P, Pb, Sb, Si, Sn, Sr, Zn, and Ti.

In the electrode according to an embodiment of the present application, the active material layer may include a binder. In the electrode according to an embodiment of the present application, the active material layer may include a conductive polymer.

There is no particular limitation on the specific type of the binder, and the binder is not particularly limited as long as the binder is a material capable of improving the adhesion between the active materials in the active material layer and the adhesion between the current collector and the active material layer.

In the electrode according to an embodiment of the present application, the active material layer may contain the binder in an amount of 0.1 wt% or more, 0.5 wt% or more, 1 wt% or more, 1.5 wt% or more, 2 wt% or more, or 10 wt% or less, 9 wt% or less, 8 wt% or less, 7 wt% or less, 6 wt% or less, 5 wt% or less, 4 wt% or less, 3 wt% or less, or 2.5 wt% or less, based on the total weight of the active material layer. In another embodiment, the active material layer may include a binder within a range formed when the upper and lower limits described above are appropriately selected. In addition, by including the above-described binder in an amount within the above-described range, it is possible to improve the adhesion force between the active materials in the active material layer and the adhesion force between an active material layer and a current collector, thereby ensuring properties having an excellent capacity retention rate.

In the electrode according to an embodiment of the present application, the type of the binder of the active material layer is not particularly limited. For example, at least one selected from the group consisting of polyvinylidene fluoride (PVDF), polyvinyl alcohol (PVA), poly(acrylic acid) (PAA), styrene-butadiene rubber (SBR), polyethylene oxide, carboxyl methyl cellulose (CMC), cellulose acetate, cellulose acetate butylate, cellulose acetate propionate, cyanoethylpullulan, cyanoethyl polyvinylalcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate, and polyarylate can be used.

In the electrode according to the embodiment of the present application, in order that the binder of the active material layer is excellent in electrical conductivity and has an excellent capacity retention rate, it may be more suitable to use a material having electrical conductivity than a material having electrical insulation. The binder may be combined with a conductive polymer to achieve the object of the present application.

In the electrode according to the embodiment of the present application, the binder of the active material layer is preferably a Lewis acid from the viewpoint of ensuring excellent electrical conductivity and properties having an excellent capacity retention rate. Specifically, the binder may be an acid in an aqueous solution, and the pH measured at 25 °C. may be less than 7, specifically within the range of 1 to 6.5, or 2 to 6. The pH may be measured according to known methods.

In the electrode according to an embodiment of the present application, for example, polyvinyl alcohol (PVA), poly(acrylic acid) (PAA), or the like can be used as the binder of the active material layer in consideration of a combination of the above-described characteristics and a conductive polymer to be described later.

The details of the binder will be described later together with the conductive polymer.

In an electrode according to an embodiment of this application, the conductive polymer may include a conductive component and an ionized polymer component. The ionized polymer component may be used as a template for the conductive polymer. The conductive polymer may be electrically coupled to the conductive component and the ionized

polymer component. That is, the conductive component may be electrically coupled to the ionized polymer component, which is a template, to form a conductive polymer. Here, the meaning of electrical coupling may mean coupling by an attractive force generated by dipole-dipole momentum.

In the electrode according to an embodiment of the present application, the active material layer may include the conductive polymer in an amount of 1 wt% or less, 0.9 wt% or less, 0.8 wt% or less, 0.7 wt% or less, 0.6 wt% or less, 0.5 wt% or less, 0.4 wt% or less, 0.3 wt% or less, 0.2 wt% or less, 0.1 wt% or less relative to the total weight of the active material layer. The lower limit of the content of the conductive polymer is not particularly limited, but in order to ensure appropriate electrical conductivity, for example, the active material layer may contain the conductive polymer in an amount of 0.01 wt% or more, 0.02 wt% or more, 0.03 wt% or more, 0.04 wt% or more, 0.05 wt% or more, 0.06 wt% or more, 0.07 wt% or more, 0.08 wt% or more, or 0.09 wt% or more relative to the total weight of the active material layer. In addition, by including the above-described conductive polymer in an amount within the above-described range, it is possible to increase the content ratio of the active material while having excellent electrical conductivity so as to have better capacity characteristics.

The conductive component may be a polymer comprising specific repeat units. The conductive component is not particularly limited as long as the homopolymer has electrical conductivity. For example, the conductive component may comprise one or more selected from the group consisting of a nitrogen-comprising conductive component exemplified by polypyrrole (PPY) or polyaniline (PANI), and a sulfur-comprising conducting component exemplification by polythiophene (PT), poly(3,4-ethylenedioxythiophene (PEDOT) or poly(p-phenylene sulfide) (PPS).

In the electrode according to an embodiment of the present application, the conductive polymer may include the ionized polymer component in an amount of 10 wt% or more, 12.5 wt% or more, 15 wt% or more, or 17.5 wt% or more, 20 wt% or more,wt% 22.5 wt% or more, 25 wt% or more relative to the total weight of the conductive polymer. The upper limit of the content of the ionized polymer component is not particularly limited, but for example, the conductive polymer may include the ionized polymer components in an amount of 95 wt% or less, 94 wt% or less, 93 wt% or less, 92 wt% or less, 91 wt% or less, 90 wt% or less, 85 wt% or less, 80 wt% or less, 75 wt% or less, 70 wt% or less, 65 wt% or less, 60 wt% or less, 55 wt% or less, or 50 wt% or less relative to the total weight of the conductive polymer. In addition, the conductive polymer may contain ionized polymer components within a range formed when the upper and lower limits described above are appropriately selected. In addition, since the conductive polymer contains a polymer component ionized to a content within the above-described range, it is possible to secure characteristics having excellent electrical conductivity and excellent capacity retention rate.

In an electrode according to an embodiment of the present application, the conductive polymer may comprise the conductive component in an amount of at least 30 parts by weight, at least 40 parts by weight, at least 50 parts by weight, at least 60 parts by weight, at least 70 parts by weight, at least 80 parts by weight, at least 90 parts by weight, or at least 100 parts by weight, or at most 800 parts by weight, at most 750 parts by weight, at most 700 parts by weight, at most 650 parts by weight, at most 600 parts by weight, at most 550 parts by weight, at most 500 parts by weight, at most 450 parts by weight, or at most 400 parts by weight relative to 100 parts by weight of an ionized polymer component. In addition, the conductive polymer may contain the conductive component within a range formed when the upper limit and the lower limit described above are appropriately selected. In addition, by combining the polymer component and the conductive component in which the above-described conductive polymer is ionized to a content within the above-described range, it is possible to secure the characteristics of excellent electrical conductivity and excellent capacity retention rate.

In the electrode according to an embodiment of the present application, the ionized polymer component of the conductive polymer may be electrically present at a negative charge. In addition, the conductive component of the conductive polymer may be present in a positive charge. The ionized polymer component and the conductive component may be electrically coupled.

In the electrode according to an embodiment of the present application, PEDOT:PAA of the conductive polymer will be described in detail. However, the above PEDOT:PAA is only an example of a conductive polymer according to an embodiment of the present application, and it is obvious that the same effect will be obtained even when other conductive components or polymer components are used.

PEDOT:PAA, which is a conductive polymer according to an embodiment of the present application, may be prepared after mixing 3,4-ethylenedioxythiophene (EDOT), which is monomer, and polyacrylic acid (PAA) with an oxidizing agent in water. The oxidizing agent may be ammonium persulfate or ferric persulfate. The EDOT mixture mixed with water is stirred at a constant temperature to synthesize PEDOT, and PEDOT:PAA is synthesized through the electrical connection between PEDOT and ionized PAA by dipole momentum. As the above PEDOT:PAA is synthesized, the reaction solution gradually turns dark blue. The reaction solution can then be purified by removing impurities with a dialysis bag and placing it in an ion exchange resin to prepare the final PEDOT:PAA.

The structure of PEDOT:PAA reduced as above may be as shown in the following structural formula A, where m and n may be determined according to the content ratio of EDOT and PAA, the weight-average molecular weight of PEDOT:PAA, and the like.

[Structural Formula A]

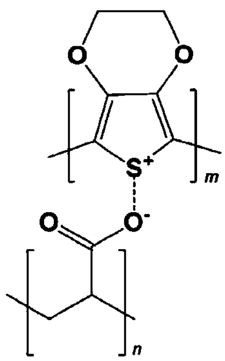

In the process of synthesizing PEDOT:PAA, which is a conductive polymer according to an embodiment of the present application, PAA, which is the polymer component, may be contained in an amount of 10 wt% or more, 12.5 wt% or more, 15 wt% or more, 17.5 wt% or more, 20 wt% or more, 22 wt% or more, 25 wt% or more, or 95 wt% or less, 94 wt% or less, 93 wt% or less, 92 wt% or less, 91 wt% or less, 90 wt% or less, 85 wt% or less, 80 wt% or less, 70 wt% or less, 65 wt% or less, 60 wt% or less, 55 wt% or less, or 50 wt% or less relative to the total weight of a solvent excluding water. In addition, the conductive component EDOT may be at least 30 parts by weight, at least 40 parts by weight, at least 50 parts by weight, at least 60 parts by weight, at least 70 parts by weight, at least 80 parts by weight, at least 90 parts by weight, or at least 100 parts by weight, or at most 800 parts by weight, at most 750 parts by weight, at most 700 parts by weight, at most 650 parts by weight, at most 600 parts by weight, at most 550 parts by weight, at most 500 parts by weight, at most 450 parts by weight, or at most 400 parts by weight, relative to 100 parts by weight of the polymer component.

In the process of synthesizing PEDOT:PAA, which is a conductive polymer according to an embodiment of the present application, PAA:PEDOT suitable for the purpose of the present application can be synthesized by controlling the content ratio of PAA and EDOT within a range formed by appropriately selecting the upper limit and the lower limit described above.

In addition, in the process of synthesizing PEDOT:PAA, which is a conductive polymer according to an embodiment of the present application, PAA, which is the polymer component, may have a weight-average molecular weight of 2,000 g/mol or more, 2,500 g/mol or more, 3,000 g/mol or more, 3,500 g/mol or more, 4,000 g/mol or more, 4,500 g/mole or more, or 5,000 g/mol or more, or 200,000 g/mol or less, 180,000 g/mol or less, 160,000 g/mol or less, 140,000 g/mol or less, 120,000 g/mol or less, or 100,000 g/mol or less. PAA:PEDOT suitable for the purpose of the present application can be synthesized by applying PAA having a weight-average molecular weight within a range formed by appropriately selecting the upper limit and the lower limit described above. When the weight-average molecular weight of the polymer component serving as a template is out of the above range, the electrical conductivity of the conductive polymer itself may be lowered, making it difficult to achieve the object of the present application.

In the present application, the weight-average molecular weight (Mw) can be measured using GPC (Gel permeation chromatography). In addition, the number-average molecular weight (Mn) can also be measured using the above GPC, and the polydispersity index (PDI) can be derived as a value (Mw/Mn) obtained by dividing the measured weight-average molecular weight (Mw) by the number-average molecular mass (Mn). Specifically, the method of measuring the weight-average molecular weight and the polydispersity index can be referred to the following <Method of Physical Properties>.

In the electrode according to an embodiment of the present application, the binder and the polymer component of the conductive polymer included in the active material layer may each independently include a resin satisfying a specific formula. Specifically, the binder may include a resin A satisfying a specific formula, and the polymer component may include a resin B satisfying a specific equation. The binder may comprise resin B an amount of at least 55 wt%, at least 60 wt%, at least 70 wt%, at least 80 wt%, at least 90 wt%, at least 95 wt%, or at least 99 wt% of resin A relative to the total weight of the binder. Further, the polymer component may comprise at least 55 wt%, at least 60 wt%, at least 70 wt%, at least 80 wt%, at least 90 wt%, at least 95 wt%, or at least 99 wt% relative to the total weight of the polymer component. In the electrode according to the embodiment of the present application, the binder and the polymer component contained in the active material layer each contain a resin A or a resin B satisfying a specific formula to be described later, so that characteristics having excellent electrical conductivity and excellent capacity retention rate can be secured. In addition, each of the above binder and polymer components may further contain a resin X, which is a different type from the resins A and B, in addition to the resin A or the resin B as necessary. For examples of the resin X, reference may be made to the above examples of the binder.

Meanwhile, the resin A and the resin B may be the same type of resin, or may be different types of resin.

In the electrode according to an embodiment of the present application, the binder included in the active material layer may include a resin A having an $SP_d$ of 30 $(MPa)^{1/2}$ or less, 29 $(MPa)^{1/2}$ or less, 28 $(MPa)^{1/3}$ or less, or 27 $(MPa)^{1/2}$ or less according to the following equation 1. the following equation 1 below relates to a particular equation satisfying Resin A described above. The lower limit of the $SP_d$ of the above-mentioned resin A according to the following equation 1 is not particularly limited as it is more advantageous as it is closer to 0, but may be, for example, 0, 0 or more, more than 0, 1 $(MPa)^{1/2}$ or more, 5 $(MPa)^{1/2}$ or more, or 10 $(MPa)^{1/2}$ or more. The $SP_d$ according to equation 1 below may be within the range formed when the upper and lower limits described above are appropriately selected. When the above binder contains the resin A satisfying the $SP_d$ according to the following equation 1 within the above range, it is possible to secure the characteristics of excellent electrical conductivity and excellent capacity retention rate.

In addition, in the electrode according to an embodiment of the present application, the polymer component may include a resin B having an SPd of 30 $(MPa)^{1/2}$ or less, 29 $(MPa)^{1/2}$ or less, 28 $(MPa)^{1/2}$ or less, 27 $(MPa)^{1/2}$ or less according to the following equation 1. The following equation 1 relates to a particular equation satisfying the foregoing resin B. The lower limit of the $SP_d$ of the above-mentioned resin B according to the following equation 1 is not particularly limited as it is more advantageous as it is closer to 0, but may be, for example, 0, 0 or more, more than 0, 1 $(MPa)^{1/2}$ or more, 5 $(MPa)^{1/2}$ or more, or 10 $(MPa)^{1/2}$ or more. The $SP_d$ according to equation 1 below may be within the range formed when the upper and lower limits described above are appropriately selected. By including the resin B in which the polymer component satisfies the $SP_d$ according to the following equation 1 within the above range, it is possible to secure the characteristics of excellent electrical conductivity and excellent capacity retention rate.

In addition, in the electrode according to the embodiment of the present application, by combining the binder containing the resin A and the polymer component containing the resin B, it is possible to secure characteristics having excellent electrical conductivity and excellent capacity retention rate.

[Equation 1]

$$SP_d = SP_W - SP_P$$

In equation 1, $SP_W$ is the solubility parameter of water measured at 25°C, and $SP_P$ is the solubility parameter of the resin A or resin B measured at 25°C.

The solubility parameter, which is a term used in this application, is a numerical expression of the degree of mutual affinity between a solute and a solvent, and can be used as an index for solubility. The solubility parameter generally represents the polar solubility parameter, the hydrogen bonding solubility parameter, and the dispersion solubility parameter, as values according to certain equations. Definitions for the solubility parameter are given in Barton, AFM (1991). Handbook of Solubility Parameters and Other Cohesion Parameters, 2nd edition. CRC Press (Non-Patent Document 1). In addition, the solubility parameter in the present application may use a known value. In the absence of a known value, it may be measured in a manner known primarily in the art. In the case where two or more kinds of substances are mixed, a value obtained by averaging the solubility parameter values of the respective substances by a molar composition ratio (calculated by high-speed liquid chromatography or the like) can be used as the solubility parameter of the present application. Known solubility parameters for certain substances are described in J. Brandrup, E. H. Immergut, and E.A. Grulke, des. Polymer Handbook, 4th ed., Wiley-Interscience, New York, 1999. (Non-Patent Document 2), and materials not shown in Non-Patent Documents 2 above are described in Yanlong Luo et al., 2017, J. Phys. Chem.C 2017, 121, 10163-10173 (Non-Patent Document 3).

According to one embodiment, water is known to have a solubility parameter of about 47.9 $(MPa)^{1/2}$ at 25°C. It is also known that polyvinyl alcohol (PVA) has a solubility parameter of about 26 $(MPa)^{1/2}$ at 25°C. It is also known that poly(acrylic acid) (PAA) has a solubility parameter of about 21 $(MPa)^{1/2}$ at 25°C. It is also known that styrene butadiene rubber (SBR) has a solubility parameter of about 17 $(MPa)^{1/2}$ at 25°C. In other words, it may be preferable not to apply the styrene-butadiene rubber in order for the resins A and B to satisfy the $SP_d$ according to the above equation 1 within the defined range. Furthermore, for example, the resins A and B may each independently comprise one or more selected from the group consisting of polyacrylic acid and polyvinyl alcohol. The types of the resins A and B are sufficient as long as the $SP_d$ according to the above equation 1 satisfies the defined range, and are not necessarily limited to the above examples.

In the electrode according to an embodiment of the present application, the ratio ($SP_{P1}/SP_{P2}$) of the solubility parameter ($SP_{P1}$) measured at 25°C. of the resin A to the solubility parameter ($SP_{P2}$) measured at 25°C, of the resin B, may be 0.8 or more, 0.85 or more, 0.9 or more, 0.95 or more, or 1 or more, or 1.2 or less, 1.15 or less, 1.1 or less, or 1.05 or less. In addition, the above ratio ($SP_{P1}/SP_{P2}$) may be included within a range formed when the above upper limit and lower limit are appropriately selected. When the above ratio ($SP_{P1}/SP_{P2}$) satisfies the above range, it is possible to secure characteristics having excellent electrical conductivity and excellent capacity retention rate.

In the electrode according to an embodiment of the present application, the binder included in the active material layer may include the resin A having a weight-average molecular weight ($M_{W1}$) of 2,000 g/mol or more, 2,500 g/mol or

more, 3,000 g/mol or more, 3,500 g/mol or more, 4,000 g/mol or more, 4,500 g/mole or more, or 5,000 g/mol or more, or 200,000 g/mol or less, 180,000 g/mol or less, 160,000 g/mol or less, 140,000 g/mol or less, 120,000 g/mol or less, or 100,000 g/mol or less. The weight-average molecular weight of the resin A may be within a range formed when the upper limit and the lower limit described above are appropriately selected. When the binder contains the resin A having the weight-average molecular weight ($M_{W1}$) in the above-described range, excellent electrical conductivity and excellent capacity retention properties can be ensured.

In the electrode according to an embodiment of the present application, the polymer component may include the resin B having a weight-average molecular weight ($M_{W2}$) of 2,000 g/mol or more, 2,500 g/mol or more, 3,000 g/mol or more, 3,500 g/mol or more, 4,000 g/mol or more, 4,500 g/mole or more, or 5,000 g/mol or more, or 200,000 g/mol or less, 180,000 g/mol or less, 160,000 g/mol or less, 140,000 g/mol or less, 120,000 g/mol or less, or 100,000 g/mol or less. The weight-average molecular weight of the resin B may be within a range formed when the upper limit and the lower limit described above are appropriately selected. When the polymer component contains the resin B having a weight-average molecular weight ($M_{W2}$) within the above-described range, excellent electrical conductivity and excellent capacity retention properties can be ensured.

In the electrode according to an embodiment of the present application, it may be more preferable that the binder contained in the active material layer contain the resin A having a weight-average molecular weight ($M_{W1}$) in the range of 10,000 g/mol to 100,000 g/mol, 20,000 g/mol to 90,000 g/mol, or 30,000 g/mol to 70,000 g/mol from the viewpoint of achieving the object of the present application.

In the electrode according to an embodiment of the present application, a ratio ($M_{W1}/M_{W2}$) of a weight-average molecular weight ($M_{W1}$) of the resin A to a weight-average molecular weight ($M_{W2}$) of the resin B may be 0.1 or more, 0.15 or more, 0.2 or more, 0.25 or more, or 0.3 or more, or may be 20 or less, 18 or less, 16 or less, or 14 or less. The ratio of the weight-average molecular weight ($M_{W1}/M_{W2}$) of the resin A to the resin B may be within a range formed when the upper limit and the lower limit described above are appropriately selected. When the ratio of the weight-average molecular weight ($M_{W1}/M_{W2}$) of the resin A to the resin B satisfies the above-described range, the properties of excellent electrical conductivity and excellent capacity retention rate can be ensured.

In the electrode according to an embodiment of the present application, each of the resin A and the resin B may independently have a glass transition temperature (Tg) of 50°C or more, 55°C or more, 60°C or more, 65°C or more, 70°C or more, 75°C or more, 80°C or more, 85°C or more, or 90°C or more. The upper limit of the glass transition temperature of the resins A and B is not particularly limited, but may be 300°C or less, 250°C or less, or 200°C or less, or 150°C or less.

In the electrode according to an embodiment of the present application, the binder included in the active material layer may include the resin A having a glass transition temperature ($T_{g1}$) of 50°C or more, 55°C or more, 60°C or more, 65°C or more, 70°C or more, 75°C or more, 80°C or more, 85°C or more, 90°C or more. That is, the resin A may be 50°C or more, 55°C or more, 60°C or more, 65°C or more, 70°C or more, 75°C or more, 80°C or more, 85°C. or more, or 90°C or more. The upper limit of the glass transition temperature of the resin A is not particularly limited, but may be 300°C or less, 250°C or less, 200°C or less, or 150°C or less.

In addition, in the electrode according to an embodiment of the present application, the polymer component may include the resin B having a glass transition temperature ($T_{g2}$) of 50°C or more, 55°C or more, 60°C or more, 65°C or more, 70°C or more, 75°C or more, 80°C or more, 85°C or more, or 90°C or more. That is, the resin B may be 50°C or more, 55°C or more, 60°C or more, 65°C or more, 70°C or more, 75°C or more, 80°C or more, 85°C or more, or 90°C or more. The upper limit of the glass transition temperature of the resin B is not particularly limited, but may be 300°C or less, 250°C or less, 200°C or less, or 150°C or less.

The term glass transition temperature as used herein may refer to a value measured using a Differential Scanning Calorimeter (DSC) in accordance with ISO 1135762. Specifically, the method of measuring the glass transition temperature can be referred to the following <Measurement of Physical Properties>.

In the electrode according to an embodiment of the present application, the ratio ($T_{g1}/T_{g2}$) of the glass transition temperature ($T_{g1}$) of the resin A to the glass transition temperature of the resin B ($T_{g2}$) may be 0.8 or more, 0.85 or more, 0.9 or more, 0.95 or more, 1 or more, or 1.2 or less, 1.15 or less, 1.1 or less, 1.05 or less. In addition, the above ratio ($T_{g1}/T_{g2}$) may be included within a range formed when the above upper limit and the above lower limit are appropriately selected. When the above-described ratio ($T_{g1}/T_{g2}$) satisfies the above-described range, it is possible to secure characteristics having excellent electrical conductivity and excellent capacity retention rate.

In the electrode according to an embodiment of the present application, the active material layer may include a binder ($W_B$) and a conductive polymer ($W_{CP}$). In the active material layer, the weight ratio ($W_B/W_{CP}$) of the binder ($W_B$) and the conductive polymer ($W_{CP}$) may be controlled to be 1 or more, 1.5 or more, 2 or more, 2.5 or more, 3 or more, 3.5 or more, 4 or more, or 100 or less, 90 or less, 80 or less, 70 or less, 60 or less, 50 or less, or 40 or less. In addition, the above weight ratio ($W_B/W_{CP}$) may be included within a range formed when the above upper limit and lower limit are appropriately selected. When the above-described weight ratio ($W_B/W_{CP}$) satisfies the above-described range, characteristics having excellent electrical conductivity and excellent capacity retention rate can be ensured.

In the electrode according to an embodiment of the present application, the conductive polymer may have an

electrical conductivity measured by a 4-probe method at 25 °C of $2\times10^{-3}$ S/cm or more, $2.5\times10^{-3}$ S/cm or more, $3\times10^{-3}$ S/cm or more, $3.5\times10^{-3}$ S/cm or more, $4\times10^{-3}$ S/cm or more, $4.5\times10^{-3}$ S/cm or more, $5\times10^{-3}$ S/cm or more, or $5.5\times10^{-3}$ S/cm or more. The higher the upper limit of the electrical conductivity, the more advantageous it is, so it is not particularly limited.

The term electrical conductivity used in this application may refer to a value measured through a 4-probe method. Specifically, the method of measuring electrical conductivity using the 4-probe method may refer to the following <Measurement method of physical properties>.

In the electrode according to an embodiment of the present application, the active material layer may further include a conductive material as necessary. When the active material layer further contains a conductive material, the electrical conductivity can be improved, and the density of the active material layer itself can be improved.

The conductive material is not particularly limited as long as it has conductivity without causing chemical change in the battery cell. For example, as the conductive material, graphite such as natural graphite or artificial graphite; carbon black such as carbon black, acetylene black, Ketjen black, channel black, panes black, lamp black, and thermal black; conductive fibers such as carbon fibers and metal fibers; conductive tubes such as carbon nanotubes (CNTs); metal powders such as fluorocarbon, aluminum, and nickel powders; conductive whiskers such as zinc oxide and potassium titanate; conductive metal oxides such as titanium oxide; conductive materials such as polyphenylene derivatives; and the like can be used.

In an electrode according to an embodiment of the present application, the active material layer may include carbon nanotubes as a conductive material. When the active material layer contains carbon nanotubes as a conductive material, not only better electrical conductivity but also better cell characteristics can be secured. The carbon nanotubes may be classified into single-walled carbon nanotubes (SWCNTs), double-walled carbon nanoparticles (DWCNTs) or multi-walled carbon microtubes (MWCNTs, depending on the number of carbon walls.

In an electrode according to an embodiment of the present application, the carbon nanotubes may have an average diameter within a range of 0.5 nm to 100 nm, within a range of 1 nm to 80 nm, within a range of 1 nm to 60 nm, within a range of 1 nm to 40 nm, within a range of 1 nm to 20 nm, or within a range of from 1 nm to 10 nm. In addition, the average diameter of the carbon nanotubes may vary depending on the type. For example, the SWCNTs may have an average diameter in the range of 0.5 nm to 10 nm, in the range of 0.5 nm to 8 nm, or in the range of 1 nm to 5 nm. In addition, for example, the MWCNTs may have an average diameter in a range of 1 nm to 60 nm, in a range of from 1 nm to 50 nm, or in a range of 2 nm to 40 nm.

In an electrode according to an embodiment of the present application, the carbon nanotubes may have an aspect ratio of 100 or more, 110 or more, 120 or more, 130 or more, 140 or more, 150 or more, 160 or more, 170 or more, 180 or more, 190 or more, or 200 or more, or 10,000 or less, 9,000 or less, 8,000 or less, 7,000 or less, 6,000 or less, 5,000 or less, 4,000 or less, 3,000 or less, 2,000 or less, or 1,000 or less. In addition, the above aspect ratio may be within a range formed by appropriately selecting the above upper limit and the above lower limit. In addition, the average diameter of the carbon nanotubes may vary depending on the type. For example, the SWCNT may have an aspect ratio of at least 300, at least 350, at least 400, at least 450, at least 500, at least 550, or at least 600, or at most 10,000, at most 9,000, at most 8,000, at most 7,000, at most 6,000, at most 5,000, at most 4,000, at most 3,000, at most 2,000, or at most 1,000. In addition, for example, the MWCNT may have an aspect ratio of at least 100, at least 110, at least 120, at least 130, at least 140, at least 150, at least 160, at least 170, at least 180, at least 190, or at least 200, or at most 1,000, at most 900, at most 800, at most 700, at most 600, at most 500, at most 400, or at most 300.

In the electrode according to the embodiment of the present application, even if the active material layer contains a small amount of a conductive material, the combination of a binder and a conductive polymer can establish an economical production system, and at the same time, have excellent electrical conductivity and excellent capacity retention rate. Specifically, even if the above active material layer reduces the use amount of a somewhat expensive conductive material based on an appropriately combined binder and conductive polymer, it is possible to secure a capacity retention rate similar to or better than that of not reducing the use amount of the conductive material.

In the electrode according to an embodiment of the present application, the active material layer may include a conductive material in an amount of 0.2 wt% or less, 0.19 wt% or less, 0.18 wt% or less relative to the total weight of the active material layer. The meaning that the active material layer contains a small amount of the conductive material may mean that it contains less than or equal to the upper limit described above. The lower limit of the content of the above conductive material is not particularly limited, but may be 0.001 wt% or more, 0.005 wt% or more. 0.01 wt% or more, 0.02 wt% or more, 0.03 wt% or more, 0.04 wt% or more, 0.05 wt% or more, 0.06 wt% or more, 0.07 wt% or more, 0.08 wt% or more, or 0.09 wt% or more relative to the total weight of the above active material layer.

In the electrode according to the embodiment of the present application, the active material layer can have excellent electrical conductivity and excellent capacity retention rate while establishing an economical production system by combining the content of the conductive polymer and the conductive material.

In the electrode according to an embodiment of the present application, the active material layer may contain the conductive material in an amount of 1 part by weight or more, 5 parts by weight or more, 10 parts by weight or more, 15 parts

by weight or more, or 20 parts by weight or more, or 500 parts by weight or less, 450 parts by weight or less, 400 parts by weight or less, 350 parts by weight or less, 300 parts by weight or less, 250 parts by weight or less, or 200 parts by weight or less, relative to 100 parts by weight of the conductive polymer. In addition, the content of the conductive material may be within a range formed by appropriately selecting the upper limit and the lower limit described above. By combining the content of the conductive material and the conductive polymer at an appropriate ratio as described above, it is possible to establish an economical production system while having excellent electrical conductivity and excellent capacity retention rate.

In the electrode according to an embodiment of the present application, the active material layer may further include a thickener, a reinforcing material, a leveling agent, an electrolyte additive, or the like as necessary. The types of these are not particularly limited as long as they are used in the art.

A method of manufacturing an electrode according to an embodiment of the present application may include a step of forming an active material layer. For the method of manufacturing the above electrode, reference may be made to the configuration of the above electrode.

In addition, as described above, the active material layer may be formed by the slurry composition. The slurry composition forming the active material layer may include a configuration including the active material layer described above.

The slurry composition may further comprise a solvent as required. The solvent may be appropriately selected in consideration of the desired performance, and may be an aqueous solvent such as water (pure water or ultrapure water), an organic solvent, or a mixed solvent of two or more kinds. For example, an organic solvent such as N-methyl-2-pyrrolinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, formamide, dimethylformamide, acetonitrile, nitromethane, methyl formate, methyl acetate, phosphoric acid triesters, trimethoxy methane, sulfolane, methyl sulfolane, 1,3-dimethyl-2-imidazolidinone, propylene carbonate derivative, tetrahydrofuran derivative, methyl propionate, alcohol, or ethyl propionate, or an aqueous solvent such as water can be used as the solvent, but water is most preferred in consideration of drying temperature or environmental influence. The content of the solvent may be selected in consideration of the desired performance of the battery cell 1 and the like.

An appropriate amount of solvent may be used for the slurry composition in consideration of the composition and dispersibility contained therein. For example, the slurry composition may comprise a solvent in an amount of at least 50 parts by weight, at least 60 parts by weight, at least 70 parts by weight, at least 80 parts by weight, at least 90 parts by weight, at least 100 parts by weight, or at least 110 parts by weight, or at most 10,000 parts by weight, at most 5,000 parts by weight, at most 3,000 parts by weight, at most 2,000 parts by weight, at most 1,000 parts by weight, at most 500 parts by weight, at most 300 parts by weight, or at most 200 parts by weight relative to 100 parts by weight of solids, or within a range formed by appropriately selecting the foregoing upper and lower limits.

The slurry composition may also include the various components described above. In addition, the slurry composition may be in a state in which the various components are appropriately dispersed. The slurry composition may be prepared by incorporating the various components according to an appropriate method and order, followed by an appropriate mixing method. The mixing method is not particularly limited, and a known method can be used. Specifically, the mixing method may be a ball mill, a sand mill, a bead mill, a pigment disperser, an ultrasonic disperser, a homogenizer, a rotating and revolving mixer, or a fill mixer.

In addition, the step of forming the active material layer may be performed by applying a slurry composition onto the release film and drying the applied slurry composition. The release film may be removed to attach the active material layer formed above to the current collector to produce an electrode.

In addition, the step of forming the active material layer may be performed by applying a slurry composition onto a current collector and drying the slurry composition. Through this method, electrodes can also be manufactured.

In addition, the method of performing the coating is not particularly limited, and a known method can be used. Specifically, a doctor blade method, a dip method, a reverse roll method, a direct roll method, a gravure method, an extrusion method, a brushing method, or the like may be used as a method of performing the above application. The application thickness of the slurry composition may be applied to an appropriate thickness in consideration of the thickness after drying, and the known method described above may be appropriately selected and performed according to the application thickness. In addition, the above-described rolling may be performed through a rolling jig or the like according to a known method.

The appropriate thickness may be adjusted to the loading of the slurry composition. The slurry composition may be applied at an appropriate loading to suit the purpose. The loading amount is not particularly limited, but may be, for example, 1 $mg/cm^2$ or more, 2 $mg/cm^2$ or more, 3 $mg/cm^2$ or more, 4 $mg/cm^2$ or more, 5 $mg/cm^2$ or more, 6 $mg/cm^2$ or more, 7 $mg/cm^2$ or more, or 8 $mg/cm^2$ or more, or 50 $mg/cm^2$ or less, 45 $mg/cm^2$ or less, 40 $mg/cm^2$ or less, 35 $mg/cm^2$ or less, 30 $mg/cm^2$ or less, 25 $mg/cm^2$ or less, 20 $mg/cm^2$ or less, or 10 $mg/cm^2$ or less, or may be within a range formed by appropriately selecting the upper and lower limits described above.

In addition, the applied slurry composition may be dried at an appropriate temperature and time. The drying may

be performed through an oven, and the drying may be performed at a temperature of the oven of 50 °C or more, 60 °C or more, 70 °C or more, 80 °C or more, 90 °C or more, or 100 °C, or more. In addition, the drying time may be performed within an appropriate range in consideration of the above drying temperature.

The basic unit that performs the charge/discharge function may be referred to as a battery cell. FIG. 1 is a schematic diagram of an exemplary structure of a battery cell 1 according to an embodiment of the present application. Referring to FIG. 1, the battery cell 1 includes a positive electrode la and a negative electrode 1b, and has a structure in which a separator 1c is interposed between the positive electrode la and the negative electrode 1b. In addition, the battery cell 1 has a structure including the positive electrode 1a, the negative electrode 1b, and the separator 1c, which is referred to as an electrode assembly. The battery cell 1 includes an exterior material 1e capable of incorporating an electrode assembly, and has a structure in which an electrolyte solution 1d is filled in a space enclosed by the exterior material 1e.

A battery cell 1 according to an embodiment of the present application may include a positive electrode 1a, a negative electrode 1b, and a separator 1c interposed between the positive electrode and the negative electrode. Here, the negative electrode 1b may be an electrode according to an embodiment of the present application. That is, the electrode according to the embodiment of the present application may be more preferably applied as the negative electrode 1b of the battery cell 1.

In the battery cell 1 according to an embodiment of the present application, a positive electrode (cathode) la refers to a reduction electrode through which an electron-transferring substance receives electrons when the battery cell 1 is discharged, and a negative electrode (anode) 1b refers to an oxidation electrode through which the electron-transfering substance transfers electrons when the battery cells 1 are discharged.

The battery cell 1 according to an embodiment of the present application may have an $L_R$ of 80% or more, 81% or more, 82% or more, 83% or more, 84% or more, 85% or more, 86% or more, 87% or more, 88% or more, 89% or more, 90% or more, 91% or more, 92% or more, 93% or more, 94% or more, 95% or more, 96% or more, 97% or more, or 98% or more when n is 100 in Equation 2 below. In addition, the battery cell 1 may have an $L_R$ of 55% or more, 56% or more, 57% or more, 58% or more, 59% or more, 60% or more, 61% or more, 62% or more, 63% or more, 64% or more, 65% or more, 66% or more, 67% or more, 68% or more, 69% or more, 70% or more, 71% or more, 72% or more, 73% or more, 74% or more, 75% or more, 76% or more, 77% or more, 78% or more, 79% or more, 80% or more, 81% or more, 82% or more, 83% or more, 84% or more, or 85% or more when n is 200 in Equation 2 below.

[Equation 2]

$$L_R = L_2/L_1 \text{ X } 100\ (\%)$$

In equation 2, $L_1$ is the discharge capacity at 1 cycle under the condition that 25°C is maintained, and $L_2$ is the discharge capacity in n cycles under the condition that 25 °C is maintained, where 1 cycle is defined as charging from 25°C to 4.2V with 0.5C current and CC-CV charging mode, and then discharging to 2.7V with a 0.5C current after charging to 0.05C.

It can be seen that, in the battery cell 1 according to the embodiment of the present application, the $L_R$ according to the above equation 2 satisfies a value within a range according to each of the above-described cycles, and thus has an excellent capacity retention rate while securing electrical conductivity. In addition, specifically, the $L_R$ according to equation 2 above may be measured based on the application of the electrode according to an embodiment of the present application as the negative electrode and the application of lithium metal as the counter electrode. More specifically, after the battery cell 1 is manufactured according to the following embodiment, the battery cell 1 may be measured with reference to the manufactured battery cell 1.

In the battery cell 1 according to an embodiment of the present application, the electrode according to the embodiment of the application may be applied as the negative electrode 1b as described above. Here, the active material layer of the negative electrode 1b includes SWCNT as a conductive material, and the $L_R$ when n is 100 in the above equation 2 may be 95 % or more, 95.1 % or more, 95.2 % or more, 95.3 % or more, 95.4 % or more, 95.5 % or more, 95.6 % or more, 95.7 % or more, 95.8 % or more, 95.8 % or more, 95.9 % or more, 96 % or more, 96.1 % or more, 96.2 % or more, 96.3 % or more, 96.4 % or more, 96.5 % or more, 96.6 % or more, 96.7 % or more, 96.8 % or more, 96.9 % or more, 97 % or more, 97.1 % or more, 97.2 % or more, 97.3 % or more, or 97.4 % or more. In addition, the active material layer of the negative electrode 1b above contains SWCNT as a conductive material, and when n is 200 in equation 2 above, the $L_R$ may be 78 % or more, 78.1 % or more, 78.2 % or more, 78.3 % or more, 78.4 % or more, 78.5 % or more, 78.6 % or more, 78.7 % or more, 78.8 % or more, 78.9 % or more, 79 % or more, 79.1 % or more, 79.2 % or more, 79.3 % or more, 79.4 % or more, 79.5 % or more, 79.6 % or more, 79.7 % or more, 79.8 % or more, 79.9 % or more, or 80 % or more. Here, the SWCNTs may be included in an amount of 0.2 wt% or less, 0.19 wt% or less or 0.18 wt% or less, 0.17 wt% or less, 0.16 wt% or less, 0.15 wt% or less, 0.14 wt% or less, 0.13 wt% or less, 0.12 wt% or less, and 0.11 wt% or less relative to the total weight of the active material layer. In the battery cell 1 according to an embodiment of the present application, an electrode made of a

combination of a binder and a conductive polymer is applied as a negative electrode even if a smaller amount of a conductive material is included, so that an economical production system can be established while excellent electrical conductivity and excellent capacity retention rate can be secured.

In the battery cell 1 according to an embodiment of the present application, the electrode according to the embodiment of the application may be applied as the negative electrode 1b as described above. Here, the active material layer of the negative electrode 1b above uses MWCNT as a conductive material, and the $L_R$ when n is 100 in equation 2 above may be 85% or more, 85.2% or more, 85.4% or more, 85.6% or more, 85.8% or more, 86% or more, 86.2% or more, 86.4% or more, 84.6% or more, 84.8% or more, 85% or more, 85.2% or more, 85.4% or more, 85.6% or more, 85.8% or more, 86% or more, or 86.2% or more. In addition, the active material layer of the negative electrode 1b above uses MWCNT as a conductive material, and the $L_R$ when n is 200 in equation 2 above may be 65% or more, 65.1% or more, 65.2% or more, 65.3% or more, 65.4% or more, 65.5% or more, 65.6% or more, 65.7% or more, 65.8% or more, 65.9% or more, 66% or more, 66.1% or more, 66.2% or more, 66.3% or more, 66.4% or more, or 66.5% or more, or 66.6% or more. Here, the MWCNTs may be included in an amount of 0.2 wt% or less, 0.19 wt% or less, or 0.18 wt% or less, 0.17 wt% or less, 0.16 wt% or less, 0.15 wt% or less, 0.14 wt% or less, 0.13 wt% or less, 0.12 wt% or less, 0.11 wt% or less, 0.1 wt% or less relative to the total weight of the active material layer. In the battery cell 1 according to an embodiment of the present application, an electrode made of a combination of a binder and a conductive polymer is applied as a negative electrode even if a smaller amount of a conductive material is included, so that an economical production system can be established while excellent electrical conductivity and excellent capacity retention rate can be secured.

In the battery cell 1 according to an embodiment of the present application, the positive electrode 1a may be manufactured by applying a positive electrode slurry composition on a positive electrode current collector and then drying to form a positive electrode active material layer. If necessary, rolling may be performed after drying. For coating, drying, rolling, and the like in the method of manufacturing the positive electrode 1a, reference may be made to the method of manufacturing an electrode according to an embodiment of the present application.

The type, size, shape, and the like of the positive electrode current collector are not particularly limited as long as they have conductivity without causing a chemical change in the battery cell 1. As the positive electrode current collector, for example, stainless steel, aluminum, nickel, titanium, calcined carbon, or aluminum, or stainless steel surface-treated with carbon, nickel, titanium or silver or the like can be used.

In addition, the positive electrode current collector may have an appropriate thickness as necessary. Although not particularly limited, the positive electrode current collector may have a thickness in the range of 1 $\mu$m to 500 $\mu$m, in the range of from 1 $\mu$m to 300 $\mu$m, in a range of from 1$\mu$m to 100 $\mu$m, or in a range of 1$\mu$m to 50 $\mu$m.

In addition, the positive electrode current collector can form fine irregularities on the surface to further strengthen the adhesive force with the positive electrode active material layer. For example, the form of the positive electrode current collector may be one or more selected from the group consisting of a film, a sheet, a foil, a net, a porous body, a foam, and a nonwoven body.

The positive electrode active material layer may include a positive electrode active material. Examples of the positive electrode active material include, but are not particularly limited to, a layered compound such as lithium cobalt oxide ($LiCoO_2$) or lithium nickel oxide ($LiNiO_2$), or a compound substituted with one or more transition metals; a lithium iron oxide such as $LiFe_3O_4$; a lithium manganese oxide such as the formula $Li+c1Mn_{2-c1}O_4$ ($0 \leq c1 \leq 0.33$), $LiMnO_3$, $LiMn_2O_3$, or $LiMnO_2$; a lithium copper oxide ($Li_2CuO_2$); a vanadium oxide such as $LiV_3O_8$, $V_2O_5$, or $Cu_2V_2O_7$; a Ni site-type lithium nickel oxide represented by the formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium mannan composite oxide represented by the formula $LiMn_{2-c3}M_{c3}O_2$ (here, M is at least any one selected from the groups consisting of Co, Ni, Fe, Cr, Zn, and Ta, and satisfies $0.01 \leq c3 \leq 0.1$) or $Li_2Mn_3MO_8$ (here, m is at least any of the groups consisting of Fe, Co, Ni, Cu, and Zn); a lithium nickel cobalt manganese (NCM) composite oxide, a lithium nickel cobalt manganese aluminum (NCMA) composite oxide, and $LiMn_2O_4$ in which a part of Li in the formula is substituted with an alkaline earth metal ion.

The positive electrode active material layer may include a binder. There is no particular limitation on the specific type of the binder, and a material that serves to improve adhesion between positive electrode active materials and adhesion between the positive electrode active material layer and the positive electrode current collector can be used.

The binder of the positive electrode active material layer may be, for example, one or more selected from the group consisting of polyvinylidene fluoride (PVDF), polyvinyl alcohol (PVA), poly(acrylic acid) (PAA), styrene-butadiene rubber (SBR), polyethylene oxide, carboxyl methyl cellulose (CMC), cellulose acetate, cellulose acetate butylate, cellulose acetate propionate, cyanoethylpullulan, cyanoethyl polyvinylalcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate, and polyarylate.

The positive electrode active material layer may further include a conductive material. The conductive material is not particularly limited as long as it has conductivity without causing chemical change in the battery cell. For example, as the conductive material, graphite such as natural graphite or artificial graphite; carbon black such as carbon black, acetylene black, Ketjen black, channel black, panes black, lamp black, and thermal black; conductive fibers such as

carbon fibers and metal fibers; conductive tubes such as carbon nanotubes (CNTs); metal powders such as fluorocarbon, aluminum, and nickel powders; conductive whiskers such as zinc oxide and potassium titanate; conductive metal oxides such as titanium oxide; conductive materials such as polyphenylene derivatives; and the like can be used.

The positive electrode slurry composition forming the positive electrode active material layer may include the above-described positive electrode active material and a binder, and may further include a conductive material as necessary. In addition, the positive electrode slurry composition may further include a solvent. The solvent may be appropriately selected in consideration of the desired performance, and may be an aqueous solvent such as water (pure water or ultrapure water), an organic solvent, or a mixed solvent of two or more. For example, as the solvent, an organic solvent such as N-methyl-2-pyrrolinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofurane, dimethyl sulfoxide, formamide, dimethylformamide, acetonitrile, nitromethane, methyl formate, methyl acetate, phosphoric acid triesters, trimethoxy methane, sulfolane, methyl sulfolane, 1,3-dimethyl-2-imidazolidinone, propylene carbonate derivative, tetrahydrofuran derivative, methyl propionate, alcohol or ethyl propionate, or an aqueous solvent such as water can be used. The content of the solvent may be selected in consideration of the desired performance of the battery cell 1 and the like.

The positive electrode slurry composition forming the positive electrode active material layer can appropriately adjust the content ratios of the active material and the binder as well as the conductive material and the solvent so as to achieve the purpose. These content ratios may be those known in the art.

The positive electrode 1a may be made of lithium metal for testing and evaluation as necessary.

In addition, the separation membrane 1c refers to a membrane through which an electron transporting substance passes while preventing electrical short-circuit between the positive electrode and the negative electrode. The separation membrane can be used without any particular limitation as long as it is generally used in the art. In particular, it is preferable that the separation membrane has a low resistance to ion migration of the electrolyte and is excellent in wettability of the electrolyte. Specifically, porous polymer films, for example, porous polymer films made of polyolefin-based polymers such as ethylene polymer, propylene polymer, ethylene/butene copolymer, ethylene/hexene copolymer, and ethylene/methacrylate copolymer, or laminated structures of two or more layers thereof can be used. In addition, a conventional porous nonwoven fabric, for example, a nonwoven fabric made of high melting point glass fibers, polyethylene terephthalate fibers, or the like may be used. In addition, a coated separation membrane containing a ceramic component or a polymer material may be used to ensure heat resistance or mechanical strength, and may optionally be used in a single-layer or multi-layer structure.

In addition, the electrolyte solution 1d refers to a medium that causes the movement of an electron transporting substance so that the electrochemical reaction between the positive electrode 1a and the negative electrode 1b is smooth. The electrolytic solution may be an organic liquid electrolyte, an inorganic liquid electrolyte, a gel-type polymer electrolyte, a molten inorganic electrolyte, or the like, which is generally used, but is not limited thereto. On the other hand, although FIG. 1 shows the liquid electrolyte solution 1d, as described above, a solid electrolyte such as a gel-type polymer electrolyte can also be used. A battery using a solid electrolyte is generally referred to as a solid battery or an all-solid battery. Liquid electrolytes generally include organic solvents and lithium salts.

The organic solvent can be used without any particular limitation as long as it can serve as a medium through which ions involved in the electrochemical reaction of the battery cell can move. Specific embodiments of the organic solvent include ester solvents such as methyl acetate, ethyl acetate, γ-butyrolactone, and ε-caprolactone; ether solvents such as dibutyl ether and tetrahydrofuran; ketone solvents such as cyclohexanone; aromatic hydrocarbon solvents such as benzene and fluorobenzene; carbonate solvents such as dimethylcarbonate (DMC), diethylcarbonate (DEC), methylethylcarbonate (MEC), ethylmethylcarbonate (EMC), ethylenecarbonate (EC), and propylenecarbonate (PC); alcohol solvents such as ethyl alcohol and Isopropyl alcohol; nitriles such as R-CN (R is a linear, branched, or cyclic hydrocarbon group having 2 to 20 carbon atoms, and may include a double bond-oriented ring or ether bond) and amides such as Dimethylformamide; dioxolanes such as 1,3-dioxolane; and sulfolane. Among them, a carbonate-based solvent is preferable, and a mixture of a cyclic carbonate (e.g., ethylene carbonate or propylene carbonate) having high ionic conductivity and high dielectric constant that can enhance the charge/discharge performance of a battery cell and a linear carbonate-based compound (e.g, ethyl methyl carbonate, dimethyl carbonate, or diethyl carbonate) having low viscosity is more preferable. In this case, using a mixture of cyclic carbonate and chain carbonate at a volume ratio of about 1:1 to about 1:9 may result in superior performance of the electrolyte.

The above lithium salt can be used without any particular limitation as long as it is a compound capable of providing lithium ions. Specifically, the lithium salt includes $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used. The concentration of the lithium salt is preferably in the range of 0.1 to 2.0 M. When the concentration of the lithium salt is within the above range, the electrolyte has an appropriate conductivity and viscosity, so that excellent electrolyte performance can be exhibited, and lithium ions can move effectively.

In addition to the components of the electrolyte solution, the electrolyte solution may further contain one or more

additives, for example, a haloalkylene carbonate-based compound such as difluoroethylene carbonate, pyridine, triethylphosphite, triethanolamine, cyclic ether, ethylene diamine, n-glyme, hexamethyl phosphoric triamide, nitrobenzene derivative, sulfur, quinone imine dye, N-substituted oxazolidinone, N,N-substituted imidazolidine, ethylene glycol dialkyl ether, ammonium salt, pyrrole, 2-methoxyethanol, or aluminum trichloride, for the purpose of improving the life characteristics of the battery, suppressing a decrease in battery capacity, and improving the discharge capacity of the battery. The additive may be contained in an amount of 0.1 to 5% by weight based on the total weight of the electrolyte.

In the above, it is classified into various types according to the type of electron transporting material. For example, when the electron transporting material is lithium (including Li and ions), the battery is referred to as a lithium ion battery.

In addition, the exterior material 1e can protect the positive electrode 1a, the negative electrode 1b, and the separation membrane 1c from external impact and prevent the electrolyte solution 1d from flowing out. Depending on the shape of the exterior material 1e, the battery cell 1 can be distinguished into a rectangular shape, a cylindrical shape, or a pouch shape.

The battery module 2 according to an embodiment of this application may include one or more battery cells 1. The battery cell 1 may be a battery cell 1 according to an embodiment of this application. The above battery cell 1 is a structure that is bundled in a certain number and placed in a housing to protect it from external shocks, heat, vibration, etc. Patent Document 1 discloses an embodiment of a battery module. FIG. 2 is a schematic diagram of an exemplary structure of a battery module 2 according to an embodiment of the present application. Referring to FIG. 2, the battery module 2 has a structure including a battery cell unit 2a, upper and lower housings 2b-1 and 2b-2, a busbar 2c, and inner and outer covers 2d-1 and 2d-2.

The battery cell unit 2a may mean a structure including one or more battery cells 1, and in the case of a plurality, connected in series and/or in parallel between the battery cells 1. The battery cell unit 2a may be embedded in a space formed by the lower housing 2b-1 and the upper housing 2b-2. However, the method of incorporating the battery cell unit 2a is not limited by FIG. 2.

On the other hand, the battery cell 1 includes a positive electrode tab extending from the positive electrode and a negative electrode tab extending from the negative electrode. The battery cell unit 2a has a structure in which positive tabs and negative tabs protrude as many as the number of included battery cells 1. The positive and negative tabs may be electrically coupled to the slit busbar 2c, respectively. A positive electrode tab and a negative electrode tab may be inserted into the slit of the busbar 2c to be electrically coupled. In addition, the battery module 2 includes an inner cover 2d-1 and an outer cover 2d-2 to cover the busbar 2c and the battery cell unit 2a.

A battery pack 3 (see FIG. 3) according to an embodiment of the present application may include one or more battery cells 1 or one or more battery modules 2. The battery cell 1 may be a battery cell 1 according to an embodiment of this application. In addition, the battery module 2 may be the battery module 2 according to an embodiment of the present disclosure. The above battery pack has a structure equipped with various control devices and protection systems, such as a battery management system (BMS) and a cooling device. Patent Document 2 discloses an embodiment of a battery pack. However, in recent years, the battery pack 3 may be configured directly from the battery cell 1 instead of the battery module 2, and this case is referred to as a cell-to-pack.

FIG. 3 is a schematic diagram of an exemplary structure of a battery pack 3 according to an embodiment of the present application. Referring to FIG. 3, the battery pack 3 is equipped with one or more battery modules 2 and electrical components 3e such as various control devices such as BMS in a housing space 3c formed inside the pack housing 3a.

In order to ensure the structural rigidity of the pack housing 3a, the battery pack 3 may include a cross member 3d that protrudes from the bottom 3a-1 of the pack housing 3a across the entire bottom 3a-1 so as to connect the opposing side wall portions 3a-2 of the pack housings 3a, and a partition wall 3c that protrudes from a bottom 3a-1 in the form of connecting the cross member 3d and the side wall portion 3a-2.

An electrical device according to an embodiment of this application may include one or more selected from the group consisting of one or more battery cells 1, one or more battery modules 2, and one or more battery packs 3. The battery cell 1, the battery module 2 and the battery pack 3 may be according to an embodiment of the present application. The electric device refers to a device that operates through electric power generated from the battery cell 1 or the like, and may be, for example, a mobile phone, a home appliance, an electric vehicle, a hybrid vehicle, or an energy storage system (ESS).

[Example for Execution of Invention]

<Method of Measuring Physical Properties>

The physical properties mentioned below were measured as follows.

1.Weight-average molecular weight and Polydispersity Index

The weight-average molecular weight (Mw) was measured using GPC (Gel permeation chromatography). Specifically, the weight-average molecular weight (Mw) can be measured by placing the sample to be analyzed in a 5 mL vial, diluting it with THF (tetrahydrofuran) solvent to a concentration of about 1 mg/mL, and then filtering the standard sample for calibration and the analysis sample through a syringe filter (pore size: 0.45 μm). As the analysis program, ChemStation of Agilent Technologies was used, and the weight-average molecular weight (Mw) can be obtained by comparing the elution time of the sample with the calibration curve. The number average molecular weight (Mn) can be measured in the same manner, and the value $_{(MW/Mn)}$ obtained by dividing the weight-average molecular weight $_{( MW)\ m}$easured above by the number average molecular weights (Mn) is the polydispersity index (PDI).

<GPC Measurement Conditions>

Device: 1200 series from Agilent Technologies
Column: Use TL Mix A & B from Agilent Technologies.
Solvent: THF (tetrahydrofuran)
Column temperature: 35 °C
Sample concentration: 1 mg/mL, 200 μL injection
Standard sample: polystyrene (MP: 3900000, 723000, 316500, 52200, 31400, 7200, 3940, 485)
*203
*2.Average particle size

The average particle size is the D50 particle size to be measured, which is the particle size measured by MASTERSIZER3000 of Marvern Ltd. equipment in accordance with the ISO-13320 standard. Distilled water was used as the solvent for the measurement. The incident laser is scattered by the measurement object dispersed in the solvent, and the value of the intensity and directionality of the scattered laser varies depending on the size of the measurement object, and the D50 particle diameter can be obtained by analyzing this using Mie theory. Through the above analysis, the particle size can be evaluated by calculating the distribution through conversion into the diameter of a sphere with the same volume as the dispersed measurement object, and through this, the D50 value, which is the median value of the distribution, can be obtained.

3. Glass transition temperature;

The glass transition temperature was measured according to a measurement method using a conventional DSC (Differential Scanning Calorimeter) equipment. DSC-STAR3 equipment (Mettler Toledo) was used as the equipment. The glass transition temperature was measured by filling about 10 mg of the measurement target in a dedicated pen and checking the endothermic and exothermic amounts according to the temperature under a heating condition of 10°C/min.

4.Electrical Conductivity

The electrical conductivity was measured using a 4-point probe method at 25°C. Specifically, four probes were attached to the sample in a row at intervals of 1 mm and measured with a source meter. The above sample was prepared by dispersing or dissolving a measurement object for measuring electrical conductivity in a solvent, coating a release film made of PET (Polyethylene terephthalate) to a thickness of 200 nm after drying, and then separating a sheet formed by sufficiently drying at a temperature of 100°C or more from the above release film. In the case of conductive polymers, coated and dried sheets using a solvent as water were used as the above samples.

5.Resistance of Active Material Layer

The resistance of the active material layer was measured by powder resistance, and the powder resistance was measured through a 4-probe method based on the sample. Specifically, the active material slurry was vacuum dried at 100°C for 30 minutes and then pulverized to prepare a powder, and then pellets prepared under a load of 9.8 MPa in an atmosphere of 25°C and a relative humidity of 50% were used using Loresta GP equipment of Mitsubishi Chem Analytic.

6.Capacity Retention Rate

The capacity retention rate was derived by $L_R$ according to Equation 2 below.

[Equation 2]

$$L_R = L_2/L_1 \times 100\ (\%)$$

In equation 2, $L_1$ is the discharge capacity at 1 cycle under the condition that 25°C is maintained, and $L_2$ is the discharge capacity in n cycles under the condition that 25 °C is maintained, where 1 cycle is defined as charging from 25°C to 4.2V with 0.5C current and CC-CV charging mode, and then discharging to 2.7V with a 0.5C current after charging to 0.05C.

Preparation Example 1

The monomer 3,4-ethylenedioxythiophene (EDOT) and poly (acrylic acid) (PAA) were mixed in a weight ratio of 5:5 (EDOT:PAA), and an oxidizing agent such as ammonium persulfate (APS) was added in an appropriate amount and mixed in water (solid content: 4.62%). The weight-average molecular weight ($M_W$) of PAA used above was in the range of about 30,000 g/mol to 70,000 g/mol. It is known that the solubility parameter of PAA measured at 25°C is about 21 $(MPa)^{1/2}$.

The reaction was then stirred at about 25°C for about 24 hours to induce the synthesis of poly (3,4-ethylenedioxythiophene, PEDOT). At the same time, PAA was also ionized, and as PEDOT was synthesized, it was electrically combined with ionized PAA to proceed with the synthesis of PEDOT:PAA. As the synthesis of PEDOT:PAA above progressed gradually, the reaction solution turned dark blue. Thereafter, the reaction-completed solution was removed from impurities with a dialysis bag, and an ion exchange resin (mixed with MP62:S100=1:1 (wt) from Lewatit) was added and stirred again to remove ionic impurities, thereby obtaining a purified PEDOT:PAA, which is a conductive polymer. The PEDOT:PAA prepared according to Preparation Example 1 is represented by the following structural formula A. In the following structural formula A, n and m may be determined according to the weight ratio of the above EDOT and PAA, the weight-average molecular weight of the above PAA, and the like.

[Structural Formula A]

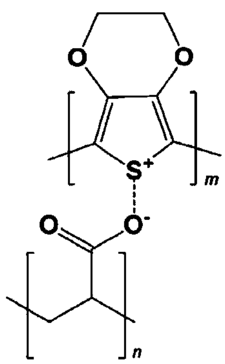

Preparation Examples 2 to 10

Preparation Examples 2 to 10 are examples produced by partially changing the properties such as the content ratio and the weight-average molecular weight in Preparation Example 1. Table 1 below summarizes the content ratios and weight-average molecular weights of the components for each of the Preparation Examples. Purified PEDOT:PAA, which is a conductive polymer represented by the above structural formula A, was obtained in the same manner as in Preparation Example 1 except for those shown in Table 1 in Preparation Examples 2 to 10. In the above structural formula A, n and m may be determined according to the weight ratio of EDOT and PAA in each Preparation Example, the weight-average molecular weight of the PAA, and the like.

[Table 1]

| Classification | EDOT:PAA Weight Ratio | $M_W$ of PAA (g/mol) | Solids (%) |
|---|---|---|---|
| Preparation Example 1 | 5:5 | Approximately 30,000 to 70,000 | 4.62 |
| Preparation Example 2 | 6:4 | Approximately 30,000 | 4.47 |
| | | to 70,000 | |
| Preparation Example 3 | 7:3 | Approximately 30,000 to 70,000 | 4.44 |
| Preparation Example 4 | 8:2 | Approximately 30,000 to 70,000 | 4.08 |
| Preparation Example 5 | 7:3 | Approximately 300,000 | 4.44 |
| Preparation Example 6 | 7:3 | Approximately 100,000 | 4.44 |
| Preparation Example 7 | 7:3 | Approximately 50,000 | 4.44 |
| Preparation Example 8 | 7:3 | Approximately 20,000 | 4.44 |
| Preparation Example 9 | 7:3 | Approximately 10,000 | 4.44 |
| Preparation Example 10 | 7:3 | Approximately 5,000 | 4.44 |

As a result of evaluating the electrical conductivity of Preparation Examples 5 to 10, the electrical conductivity of the above-prepared Preparation Example 5 to 10 is as shown in Table 2 below. Electrical conductivity was measured through a 4-probe method at 25°C according to the above <Physical Property Evaluation Method>.

[Table 2]

| Classification | Mw (g/mol) of PAA | Electrical Conductivity (x $10^{-3}$ S/cm) |
|---|---|---|
| Preparation Example 5 | Approximately 300,000 | 1.07 |
| Preparation Example 6 | Approximately 100,000 | 4.46 |
| Preparation Example 7 | Approximately 50,000 | 5.90 |
| Preparation Example 8 | Approximately 20,000 | 5.64 |
| Preparation Example 9 | Approximately 10,000 | 4.72 |
| Preparation Example 10 | Approximately 5,000 | 3.62 |

Referring to Table 2 above, it can be seen that when the weight-average molecular weight of PAA exceeds a predetermined range, a conductive polymer having a desired level of electrical conductivity cannot be formed. In addition, referring to Table 2 above, it can be seen that when the weight-average molecular weight of PAA is within a predetermined range, a conductive polymer having an excellent level of electrical conductivity can be formed.

The active material slurry prepared according to Table 3 below was applied to a copper foil having a thickness of about 8-10 $\mu$m at a loading of 8-9 mg/cm$^2$ . The copper foil coated with the above active material slurry was vacuum dried at 100°C. for 30 minutes and then rolled to prepare a negative electrode including an active material layer.

The active material slurry used to prepare the negative electrode was prepared by mixing in a weight ratio as shown in Table 2 below and adding an appropriate amount of deionized water.

[Table 3]

| Classification | Content ratio (parts by weight) | | | | Conductivity Polymer Types | Conductive Material Type |
|---|---|---|---|---|---|---|
| | Active Material (A) | Binder (B) | Conductivity Polymer (C) | Conducting Materials (D) | | |
| Practical Example 1 | 97.4 | 2 | 0.5 | 0.1 | Preparation Example 1 | SWCNT |
| Practical Example 2 | 97.4 | 2 | 0.5 | 0.1 | Preparation Example 2 | SWCNT |
| Practical Example 3 | 97.4 | 2 | 0.5 | 0.1 | Preparation Example 3 | SWCNT |

(continued)

| Classification | Content ratio (parts by weight) | | | | Conductivity Polymer Types | Conductive Material Type |
|---|---|---|---|---|---|---|
| | Active Material (A) | Binder (B) | Conductivity Polymer (C) | Conducting Materials (D) | | |
| Practical Example 4 | 97.95 | 2 | 0.05 | - | Preparation Example 3 | - |
| Practical Example 5 | 97.9 | 2 | 0.1 | - | Preparation Example 3 | - |
| Practical Example 6 | 97.85 | 2 | 0.05 | 0.1 | Preparation Example 3 | SWCNT |
| Practical Example 7 | 97.8 | 2 | 0.1 | 0.1 | Preparation Example 3 | SWCNT |
| Practical Example 8 | 97.85 | 2 | 0.05 | 0.1 | Preparation Example 3 | MWCNT |
| Practical Example 9 | 97.8 | 2 | 0.1 | 0.1 | Preparation Example 3 | MWCNT |
| Practical Example 10 | 97.4 | 2 | 0.5 | 0.1 | Preparation Example 4 | SWCNT |
| Comparative Example 1 | 98 | 2 | - | - | - | - |
| Comparative Example 2 | 97.9 | 2 | - | 0.1 | - | SWCNT |
| Comparative Example 3 | 97.75 | 2 | - | 0.25 | - | SWCNT |
| Comparative Example 4 | 97.9 | 2 | - | 0.1 | - | MWCNT |
| Comparative Example 5 | 97.75 | 2 | - | 0.25 | - | MWCNT |

In Table 3, the active material (A) used was a mixture of a carbon active material (A1) having an average particle size of about 12 μm and a silicon active material (A2) having an average particle size of about 6 μm in a weight ratio of 9:1 (A1:A2). A mixture of artificial graphite (A11) and natural graphite (A12) in a weight ratio of 7:3 (A11:A12) was used as the carbon active material (A1), and $SiO_x$ was used as the silicon active material (A2). In addition, in Table 3, poly(acrylic acid) (PAA) was used as the binder (B). The PAA used as the binder had a weight-average molecular weight ($M_W$) of about 30,000 g/mol to 70,000 g/mol. The PAA used as the binder had a glass transition temperature (Tg) of about 100°C. In addition, PAA used as the binder is known to have a solubility parameter of about 21 $(MPa)^{1/2}$ measured at 25°C. In addition, in Table 3, SWCNTs were used as single-walled carbon nanotubes having an average diameter of about 1 to 2 nm and an aspect ratio of about 1,000 or more. In addition, in Table 3 above, MWCNTs were used as multi-walled carbon nanotubes having an average diameter of about 3 to 40 nm and an aspect ratio of about 200 or more.

(2) Battery cell manufacturing

Each negative electrode prepared above was used as a working electrode, a lithium metal sheet having a thickness of about 150 μm was used as a reference electrode, and a polyethylene separator (thickness: 20 μm, porosity: 40%) was interposed between the negative electrode and the lithium metal sheet to prepare an electrode assembly. The electrode assembly prepared above was placed in a battery container and the electrolyte was injected, and then a 2032 half battery cell was prepared according to a conventional manufacturing method.

The above electrolyte solution was prepared by dissolving $LiPF_6$ in a mixed solvent in which ethylene carbonate (EC), propylene carbonate (PC) and diethyl carbonate (DEC) were mixed at a weight ratio of 3:2:5 (EC:PC:DEC) to a concentration of 1.3 M.

The resistance of the active material layer of the negative electrode active material layers of Practical Examples 4 to 9 and Comparative Examples 1 to 5 prepared above are shown in Table 4 below. The resistance of the active material

layer was measured in accordance with the above <Physical Properties Evaluation Method>.

In addition, the capacity retention rates for the half battery cells of Practical Examples 1 to 9 and Comparative Examples 1 to 6 prepared above are shown in Table 4 below. The capacity retention rate of the battery cell was measured in accordance with the above <Physical Property Evaluation Method>. In Table 4 below, the numerical value in the capacity retention rate means the $_{LR}$ value according to Equation 2 below.

[Equation 2]

$$L_R = L_2/L_1 \times 100\ (\%)$$

In Equation 2, $L_1$ is the discharge capacity at 1 cycle under the condition that 25°C is maintained, a$_{nd\ L2\ is\ t}$he discharge capacity in n cycles under the condition that 25 °C is maintained, where 1 cycle is defined as charging from 25°C to 4.2V with 0.5C current and CC-CV charging mode, and then discharging to 2.7V with a 0.5C current after charging to 0.05C.

[Table 4]

| Classification | Resistance of Active Material Layer (Ω·cm) | Capacity Retention Rate (%, n=100 cycle) | Capacity Retention Rate (%, n=200 cycle) |
|---|---|---|---|
| Practical Example 1 | 0.113 or less | 98.9 | 85 or more |
| Practical Example 2 | 0.113 or less | 99.3 | 85 or more |
| Practical Example 3 | 0.113 or less | 99.7 | 85 or more |
| Practical Example 4 | 0.1997 | 86.2 | 62.5 |
| Practical Example 5 | 0.1223 | 85.9 | 81.9 |
| Practical Example 6 | 0.1194 | 96.4 | 82.9 |
| Practical Example 7 | 0.1139 | 96.5 | 83.1 |
| Practical Example 8 | 0.1844 | 88.3 | 66.7 |
| Practical Example 9 | 0.1597 | 91.6 | 73.2 |
| Practical Example 10 | - | 97.4 | Approximately 80 |
| Comparative Example 1 | 0.2979 | 77.2 | 44.4 |
| Comparative Example 2 | 0.1576 | 93.8 | 77.6 |
| Comparative Example 3 | 0.1132 | 97.2 | 84.5 |
| Comparative Example 4 | 0.2555 | 80.8 | 51.6 |
| Comparative Example 5 | 0.2011 | 85.1 | 60.1 |

Comparing Practical Examples 4 and 5 with Comparative Example 1 in Table 4, it can be seen that Practical Examples to which a conductive polymer was applied showed a better capacity retention rate. In addition, in Table 4, when Practical Examples 1 to 3, 6, 7, and 10 are compared with Comparative Example 2, it can be seen that Practical Examples show a better capacity retention rate. That is, even when the same type (SWCNT) and amount (0.1 parts by weight) of the conductive material as in the Comparative Example are applied to the embodiment, better performance can be ensured by applying the conductive polymer. In addition, when Practical Examples 1 to 3, 6, 7, and 10 are compared with Comparative Example 3 in Table 4, it can be seen that Practical Examples show superior or similar capacity retention rates compared to Comparative Examples. That is, it can be seen that the Practical Example (0.1 parts by weight) can secure superior or similar performance compared to the Comparative Example (0.25 parts by weight) in which the same type of conductive material (SWCNT) is used more.

In addition, when Practical Example 8 and 9 are compared with Comparative Example 4 in Table 4, it can be seen that the Practical Example shows a better capacity retention rate. That is, even when the same type (MWCNT) and amount (0.1 parts by weight) of the conductive material as in the Comparative Example are applied to the embodiment, better performance can be ensured by applying the conductive polymer.

In addition, when Practical Example 8 and 9 are compared with Comparative Example 5 in Table 4, it can be seen that the Practical Example shows a better capacity retention rate. That is, it can be seen that the Practical Example (0.1

parts by weight) can secure superior or similar performance compared to the Comparative Example (0.25 parts by weight) in which the same type of conductive material (MWCNT) is used more.

[Explanation of Signs]

1: Battery Cell
2: Battery module
3: Battery pack

**Claims**

1. An electrode, comprising:

a current collector and an active material layer located on at least one side of the current collector,
wherein the active material layer comprises an active material, a binder and a conductive polymer,
the conductive polymer comprises a conductive component and an ionized polymer component,
the binder comprises a resin A having an $SP_d$ of 30 $(MPa)^{1/2}$ or less according to the following equation 1,
the polymer component comprises a resin B having an $SP_d$ of 30 $(MPa)^{1/2}$ or less according to the following equation 1:

[Equation 1]

$$SP_d = SP_W - SP_P$$

In equation 1, $SP_W$ is the solubility parameter of water measured at 25°C and $SP_P$ is the solubility parameter of the resin A or resin B measured at 25°C.

2. The electrode according to claim 1, wherein the ratio ($SP_{P1}/SP_{P2}$) of the solubility parameter ($SP_{P1}$) measured at 25°C of the resin A to the solubility parameter ($SP_{P2}$) measured at 25°C of the resin B is in the range of 0.8 to 1.2.

3. The electrode according to claim 1, wherein a ratio ($M_{W1}/M_{W2}$) of a weight-average molecular weight ($M_{W1}$) of the resin A to a weight-average molecular weight ($M_{W2}$) of the resin B is in a range of 0.1 to 20.

4. The electrode according to claim 1, wherein the weight-average molecular weight ($M_{W2}$) of the resin B is in the range of 2,000 g/mol to 200,000 g/mol.

5. The electrode according to claim 1, wherein each of the resin A and the resin B independently have a glass transition temperature (Tg) of 50 °C or more.

6. The electrode according to claim 1, wherein the conductive polymer has an electrical conductivity of $2\times10^{-3}$ S/cm or more measured through a 4-probe method at 25°C.

7. The electrode according to claim 1, wherein the conductive component and the ionized polymer component are electrically coupled to each other in the conductive polymer.

8. The electrode according to claim 1, wherein the conductive polymer comprises the ionized polymer component in an amount of 10 wt% or more relative to the total weight of the conductive polymer.

9. The electrode according to claim 8, wherein the conductive polymer comprises the conductive component in a range from 30 parts by weight to 800 parts by weight relative to 100 parts by weight of the ionized polymer component.

10. The electrode according to claim 1, wherein the weight ratio ($W_B/W_{CP}$) of the binder ($W_B$) and the conductive polymer ($W_{CP}$) is within a range of 1 to 100.

**11.** The electrode according to claim 1, wherein the conductive polymer is contained in an amount of 1 wt% or less relative to the total weight of the active material layer.

**12.** The electrode according to claim 1, wherein the active material is contained in the range of 80 wt% to 99 wt% relative to the total weight of the active material layer.

**13.** The electrode according to claim 1, wherein the active material comprises a carbon active material and a silicon active material.

**14.** The electrode according to claim 13, wherein the active material comprises the carbon active material in the range of 80 wt% to 99 wt% relative to the total weight of the active material,
the active material comprises the silicon active material in a range from 0.01 parts by weight to 30 parts by weight relative to 100 parts by weight of the carbon active material.

**15.** The electrode according to claim 13, wherein a ratio ($D_C/D_{Si}$) of an average particle size ($D_C$) of the carbon active material to an average particle size of the silicon active material in the active material is in the range of 0.1 to 10.

**16.** The electrode according to claim 1, wherein the active material layer further comprises a conductive material,
the conductive material is contained in an amount of 0.2 wt% or less relative to the total weight of the active material layer.

**17.** A battery cell, comprising:

a positive electrode, a negative electrode, and a separator interposed between the positive electrode and the negative electrode,
wherein the negative electrode is the electrode of claim 1; and
an $L_R$ of 80% or more when n is 100 and an $L_R$ of 55% or more when n was 200 in following equation 2:

$$L_R = L_2/L_1 \text{ X } 100\ (\%)$$

In equation 2, $L_1$ is the discharge capacity at 1 cycle under the condition that 25°C is maintained, and $L_2$ is the discharge capacity in n cycles under the condition that 25 °C is maintained, where 1 cycle is defined as charging from 25°C to 4.2V with 0.5C current and CC-CV charging mode, and then discharging to 2.7V with a 0.5C current after charging to 0.05C.

**18.** A battery module, comprising:

one or more battery cells,
wherein the battery cell is a battery cell of claim 17.

**19.** A battery pack, comprising:

one or more battery cells or one or more battery modules,
wherein the battery cell is the battery cell of claim 17, and the battery module is the battery module of claim 18.

**20.** An electrical device, comprising:

at least one selected from the group consisting of at least one battery cell, at least one battery module and at least one battery pack,
wherein the battery cell is the battery cell of claim 17, the battery module is the battery module of claim 18, and the battery pack is the battery pack of claim 19.

FIG. 1

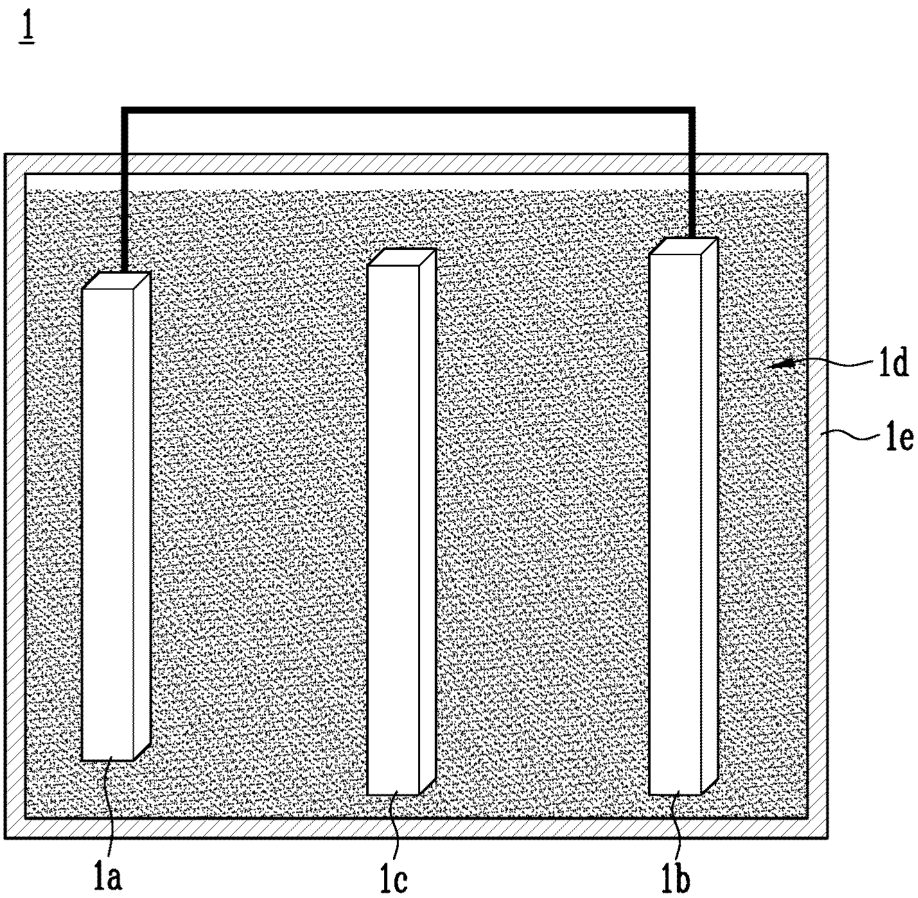

FIG. 2

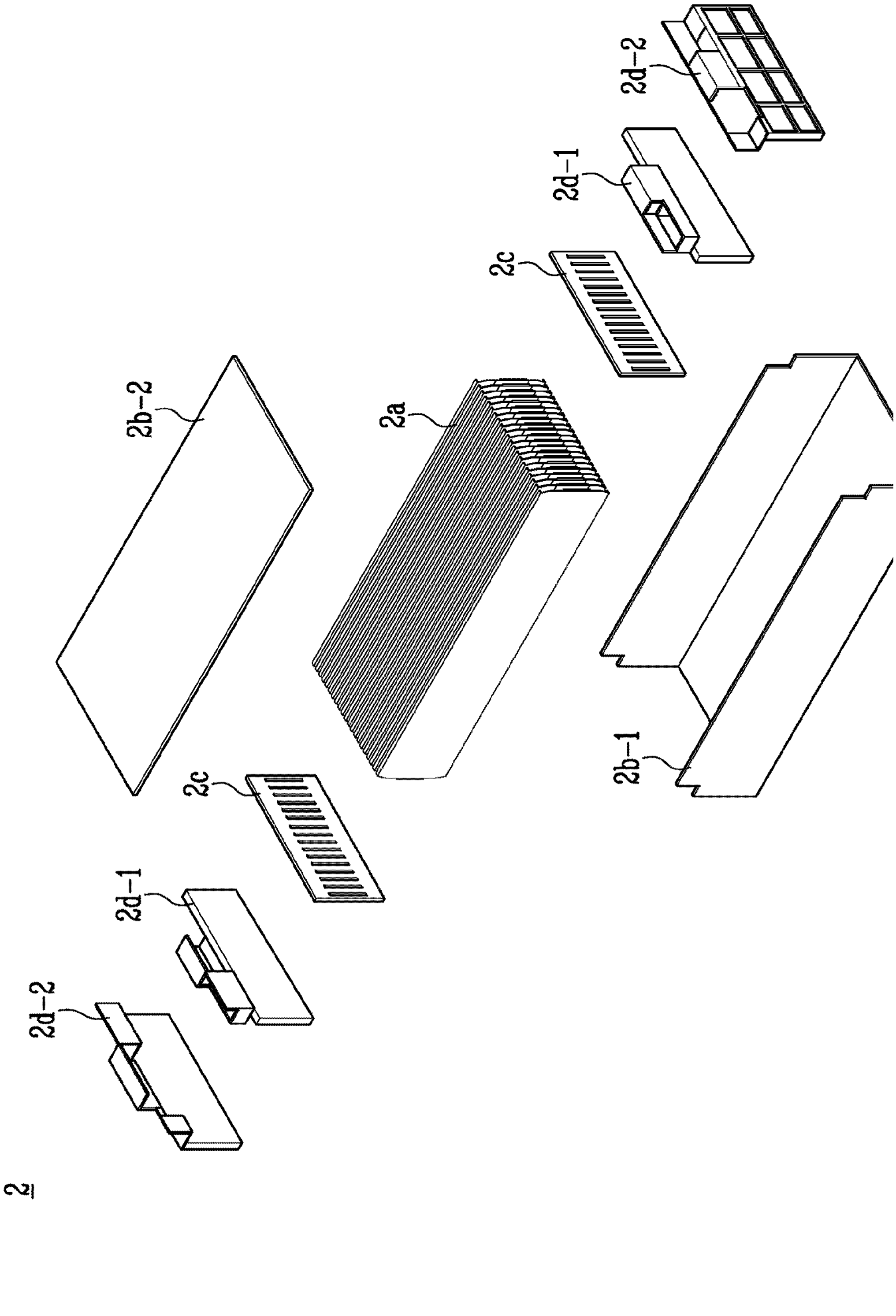

FIG. 3

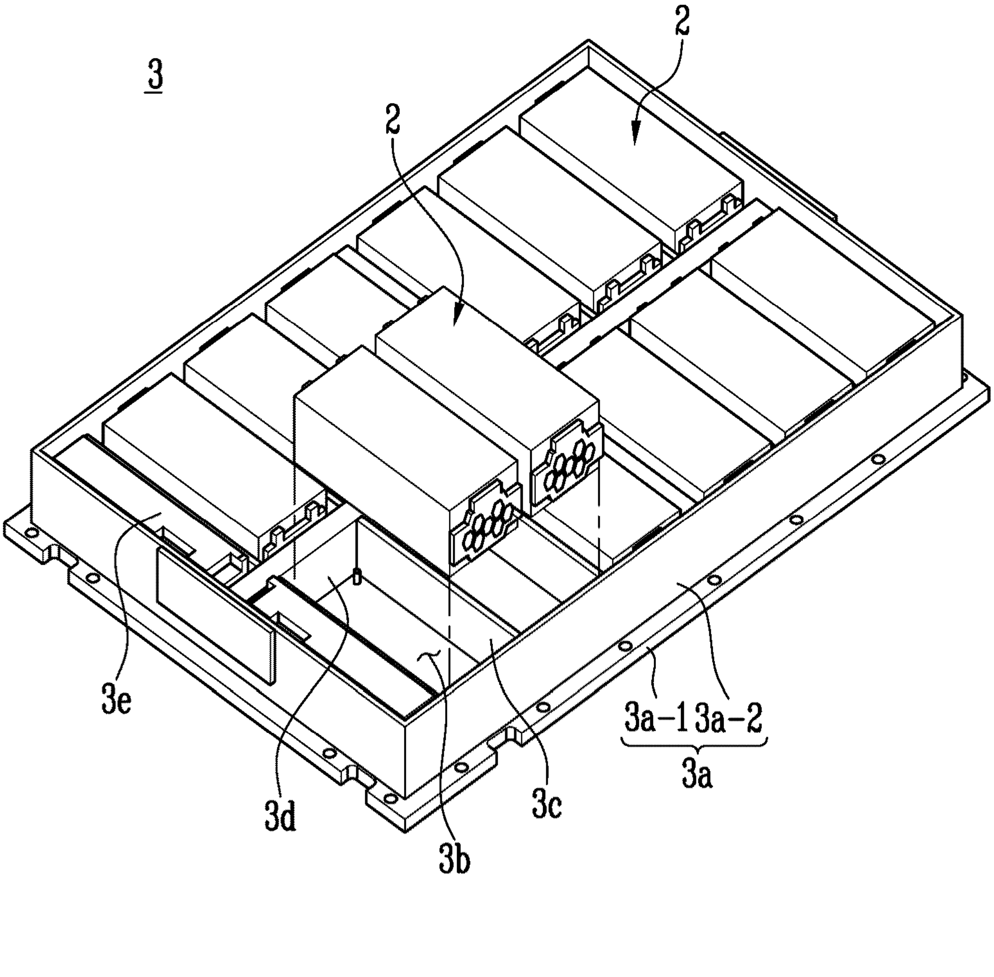

**INTERNATIONAL SEARCH REPORT**

International application No. **PCT/KR2024/001655**

**A. CLASSIFICATION OF SUBJECT MATTER**

**H01M 4/62**(2006.01)i; **H01M 4/133**(2010.01)i; **H01M 4/134**(2010.01)i; **H01M 4/36**(2006.01)i; **H01M 4/583**(2010.01)i; **H01M 4/38**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/62(2006.01); G06F 3/041(2006.01); G06F 3/046(2006.01); H01M 10/052(2010.01); H01M 10/42(2006.01); H01M 12/08(2006.01); H01M 4/13(2010.01); H01M 4/133(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 바인더(binder), 수지(resin), 전도성(conductive), 용해도 파라미터 (solubility parameter), 도전재(conductive material)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0160688 A (SILA NANOTECHNOLOGIES INC.) 06 December 2022 (2022-12-06) See claims 1-2 and 18; and paragraphs [0006], [0031], [0044], [0048], [0050], [0056]-[0058], [0062], [0102]-[0103], [0111]-[0112] and [0115]-[0116]. | 1-7,10,13-14,16-20 |
| Y | | 8-9,11-12,15 |
| Y | KR 10-2022-0060936 A (KOOKMIN UNIVERSITY INDUSTRY ACADEMY COOPERATION FOUNDATION) 12 May 2022 (2022-05-12) See claim 4; and paragraphs [0071], [0088], [0121], [0180], [0185]-[0186] and [0241]. | 8-9,11-12 |
| Y | KR 10-2017-0033123 A (SAMSUNG ELECTRONICS CO., LTD. et al.) 24 March 2017 (2017-03-24) See paragraphs [0055] and [0071]. | 15 |
| A | KR 10-2021-0062980 A (LG DISPLAY CO., LTD. et al.) 01 June 2021 (2021-06-01) See paragraph [0099]. | 1-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 May 2024** | **07 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/001655**

**C. DOCUMENTS CONSIDERED TO BE RELEVANT**

| Category* | Citation of document, with indication, where appropriate, of the relevant passages | Relevant to claim No. |
|---|---|---|
| A | YANG, S. et al. Preparation and thermal characterization of the glass transition temperatures of sulfonated polystyrene-metal ionomers. Journal of Polymer Science: Part B: Polymer Physics. 1990, vol. 28, pp. 1685-1697. See table 1. | 1-20 |
| A | KR 10-2021-0025586 A (CNP SOLUTIONS CO., LTD. et al.) 09 March 2021 (2021-03-09) See entire document. | 1-20 |
| A | KR 10-2022-0036961 A (CONTEMPORARY AMPEREX TECHNOLOGY CO., LIMITED) 23 March 2022 (2022-03-23) See entire document. | 1-20 |

Form PCT/ISA/210 (second sheet) (July 2022)

**INTERNATIONAL SEARCH REPORT**
**Information on patent family members**

International application No.
**PCT/KR2024/001655**

| Patent document cited in search report | Publication date (day/month/year) | Patent family member(s) | Publication date (day/month/year) |
|---|---|---|---|
| KR 10-2022-0160688 A | 06 December 2022 | CN 115702508 A | 14 February 2023 |
| | | EP 4128392 A1 | 08 February 2023 |
| | | JP 2023-531353 A | 24 July 2023 |
| | | US 2021-0313617 A1 | 07 October 2021 |
| | | WO 2021-203086 A1 | 07 October 2021 |
| KR 10-2022-0060936 A | 12 May 2022 | KR 10-2536022 B1 | 24 May 2023 |
| | | US 2022-0140347 A1 | 05 May 2022 |
| KR 10-2017-0033123 A | 24 March 2017 | CN 106953068 A | 14 July 2017 |
| | | CN 106953068 B | 26 November 2021 |
| | | EP 3145001 A1 | 22 March 2017 |
| | | EP 3145001 B1 | 15 April 2020 |
| | | KR 10-2368307 B1 | 02 March 2022 |
| | | US 10516157 B2 | 24 December 2019 |
| | | US 2017-0077497 A1 | 16 March 2017 |
| KR 10-2021-0062980 A | 01 June 2021 | WO 2021-101163 A1 | 27 May 2021 |
| KR 10-2021-0025586 A | 09 March 2021 | KR 10-2350257 B1 | 12 January 2022 |
| KR 10-2022-0036961 A | 23 March 2022 | CN 112563559 A | 26 March 2021 |
| | | CN 115295791 A | 04 November 2022 |
| | | EP 3955358 A1 | 16 February 2022 |
| | | EP 3955358 B1 | 20 March 2024 |
| | | JP 2022-534453 A | 29 July 2022 |
| | | JP 7196364 B2 | 26 December 2022 |
| | | KR 10-2502618 B1 | 24 February 2023 |
| | | US 11646415 B2 | 09 May 2023 |
| | | US 2022-0166018 A1 | 26 May 2022 |
| | | WO 2021-057428 A1 | 01 April 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220150693
- KR 1020220142853


### Non-patent literature cited in the description


- Handbook of Solubility Parameters and Other Cohesion Parameters. CRC Press
- **J. BRANDRUP** ; **E. H. IMMERGUT** ; **E.A. GRULKE**. Polymer Handbook. Wiley-Interscience, 1999
- **YANLONG LUO et al.** *J. Phys. Chem.C*, 2017, vol. 121, 10163-10173
- **BARTON, AFM**. Handbook of Solubility Parameters and Other Cohesion Parameters. CRC Press, 1991